(19) Europäisches Patentamt
European Patent Office
Office européen des brevets

(11) **EP 4 111 365 B1**

(12) **EUROPEAN PATENT SPECIFICATION**

(45) Date of publication and mention
of the grant of the patent:
**29.07.2026 Bulletin 2026/31**

(21) Application number: **21760427.1**

(22) Date of filing: **26.02.2021**

(51) International Patent Classification (IPC):
**G06V 20/64** (2022.01)    **G06V 10/44** (2022.01)
**G06V 10/24** (2022.01)    **G06V 10/25** (2022.01)
**G06V 10/26** (2022.01)    **G06T 15/20** (2011.01)
**G06T 7/536** (2017.01)    **G06T 7/543** (2017.01)
**G06T 19/00** (2011.01)

(52) Cooperative Patent Classification (CPC):
**G06V 20/647; G06T 7/536; G06T 7/543;**
**G06T 19/00; G06V 10/25; G06V 10/26;**
**G06V 10/44;** G06T 2200/08; G06T 2210/04;
G06T 2219/012; G06V 10/247; G06V 2201/10

(86) International application number:
**PCT/US2021/019994**

(87) International publication number:
**WO 2021/174060 (02.09.2021 Gazette 2021/35)**

(54) **APPARATUS AND METHOD OF CONVERTING DIGITAL IMAGES TO THREE-DIMENSIONAL CONSTRUCTION IMAGES**

VORRICHTUNG UND VERFAHREN ZUR UMWANDLUNG DIGITALER BILDER IN DREIDIMENSIONALE KONSTRUKTIONSBILDER

APPAREIL ET PROCÉDÉ DE CONVERSION D'IMAGES NUMÉRIQUES EN IMAGES DE CONSTRUCTION TRIDIMENSIONNELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2020 US 202062982558 P**
**27.02.2020 US 202062982560 P**
**27.02.2020 US 202062982564 P**
**27.02.2020 US 202062982567 P**

(43) Date of publication of application:
**04.01.2023 Bulletin 2023/01**

(73) Proprietor: **Tailorbird, Inc.**
**Princeton, New Jersey 08540 (US)**

(72) Inventors:
• **CANTWELL, Jr., Michael T.**
**San Francisco, California 94115 (US)**
• **SARAF, Gaurav**
**San Francisco, California 94115 (US)**
• **FIJAN, Robert S.**
**San Francisco, California 94115 (US)**

(74) Representative: **Barker Brettell LLP**
**100 Hagley Road**
**Edgbaston**
**Birmingham B16 8QQ (GB)**

(56) References cited:
**US-A1- 2012 183 204**    **US-A1- 2012 183 204**
**US-A1- 2012 259 743**    **US-A1- 2014 267 698**
**US-A1- 2018 268 220**

• **YASUTAKA FURUKAWA ET AL: "Reconstructing building interiors from images", COMPUTER VISION, 2009 IEEE 12TH INTERNATIONAL CONFERENCE ON, IEEE, PISCATAWAY, NJ, USA, 29 September 2009 (2009-09-29), pages 80 - 87, XP031672497, ISBN: 978-1-4244-4420-5**

**Description**

CROSS-REFERENCE TO RELATED APPLICATIONS

This application claims priority to U.S. Provisional Patent Application Serial Numbers 62/982,558; 62/982,560; 62/982,564 and 62/982,567, each filed February 27, 2020.

TECHNICAL FIELD

This application relates generally to construction imaging and more specifically to a construction image conversion method that converts digital images into three-dimensional (3D) construction images.

BACKGROUND

Many segments of the real estate industry and other adjacent markets have fully embraced the emerging digital economy including but not limited to the development of significant digital content, customer procurement and engagement applications and many other advanced tools that leverage digital and social media platforms and associated content. For example, the real estate industry has significantly engaged with the emerging digital economy and large quantities of high-quality digital pixel images, including photos and floorplans and other online content is included to improve customer interaction and enable improved results in selling or renting houses, condominiums, apartments or other properties.

An issue that exists today is that the construction industry, unlike the real estate industry, is missing an opportunity to engage with customers in an easy-to-use digital framework. The vast majority of construction sales and customer interactions remain in person and often require multiple steps, visits and corresponding delays to provide quotes, information and the requested services. Even when the industry leverages digital methods such as with CAD-based floor plans, the industry continues to show significant inefficiencies and inconsistencies. Additionally, there is an existing opportunity to leverage the significant digital content and data available in adjacent industries, such as the online real estate industry, in order to improve outcomes and efficiency in the construction industry. The real estate industry has amassed significant quantities of online floorplans and room layout photography that is generally available for buying or renting real estate. However, the construction industry has not leveraged this large repository of digital images and floorplans to improve the construction industry and the services provided. For at least the reasons described above, there is a need for an improved system and method of converting digital images into 3D dimensionalized construction or design-ready images.

Relevant prior art is US 2012/183204 A1.

SUMMARY OF THE INVENTION

A method implemented with instructions executed by a processor includes receiving a digital image of an interior space. At least one detected object is identified within the digital image. Dimensions of the detected object are determined. Image segmentation is applied to the digital image to produce a segmented image. Edges are detected in the segmented image to produce a combined output image. Geometric transformation, field of view and depth correction are applied to the combined output image to correct for image distortion to produce a geometrically transformed digital image. Dimensions are applied to the geometrically transformed digital image at least partially based on the dimensions of the detected object to produce a dimensionalized floorplan.

BRIEF DESCRIPTION OF THE DRAWINGS

The above and other aspects, features and advantages of the invention will be more apparent from the following more particular description thereof, presented in conjunction with the following drawings wherein:

**FIG. 1A** is a flow chart showing a conversion method that converts digital images into three-dimensional (3D) construction images in accordance with one embodiment of the instant invention;
**FIG. 1B** illustrates an exemplary system diagram for one embodiment of the instant invention;
**FIGS. 2A-2D** illustrate exemplary pixel images demonstrating object detection;
**FIGS. 3A-3B** illustrate other exemplary pixel images demonstrating object detection;
**FIGS. 4A-4D** illustrate other exemplary pixel images demonstrating object segmentation;
**FIG. 5** is a pictorial representation of an ICENET object segmentation technique used in accordance with an embodiment of the invention;
**FIG. 6** is a pictorial representation of a PSP object segmentation technique used in accordance with an embodiment of the invention;

FIG. 7 is a pictorial representation of a Deeplab v3 object segmentation technique used in accordance with an embodiment of the invention;

FIG. 8 is a flow chart of a Canny Edge Detection Model utilized in accordance with an embodiment of the invention;

FIGS. 9A-9F illustrate other exemplary pixel images demonstrating edge detection;

FIGS. 10A-10F illustrate other exemplary pixel imageS showing a combined output of object detection, object segmentation and edge detection;

FIG. 11 is an illustration of a combined output with angular offset identified;

FIGS. 12A-12F are a series of images demonstrating projective transformation of an image;

FIG. 13 illustrates an exemplary standard construction objects of known dimensionality;

FIG. 14 illustrates another exemplary standard construction object of known dimensionality;

FIG. 15 illustrates an exemplary identifiable object of known dimensionality;

FIG. 16 illustrates another exemplary identifiable object of known dimensionality;

FIG. 17 is an exemplary pixel image of a floorplan;

FIG. 18 illustrates an exemplary system diagram for another embodiment of the instant invention;

FIGS. 19A-19B depict an exemplary pixel image as input and a 3D fully dimensionalized image as output;

FIGS. 20A-20B depict multiple examples of 3D dimensions applied to identified reference objects;

FIG. 21 depicts an exemplary construction takeoff;

FIG. 22 depicts an exemplary blueprint pixel image;

FIG. 23 is a flow chart that depicts a method of converting dimensionalized construction images into a 3D context-rich takeoff package; and

FIG. 24 is an exemplary system for converting at least one pixel image into a 3D context-rich takeoff package.

## DETAILED DESCRIPTION

A method and system for converting at least one pixel image into a 3D construction image will be described. In the following exemplary description numerous specific details are set forth in order to provide a more thorough understanding of embodiments of the invention. It will be apparent to an artisan of ordinary skill that embodiments of the invention may be practiced without incorporating all aspects of the specific details described herein. In other instances, specific features, quantities, or measurements well-known to those of ordinary skill, have not been described in detail so as not to obscure the invention. Reader should note that although examples of the invention are set forth herein, the claims, and the full scope of any equivalents, are what define the metes and bounds of the invention.

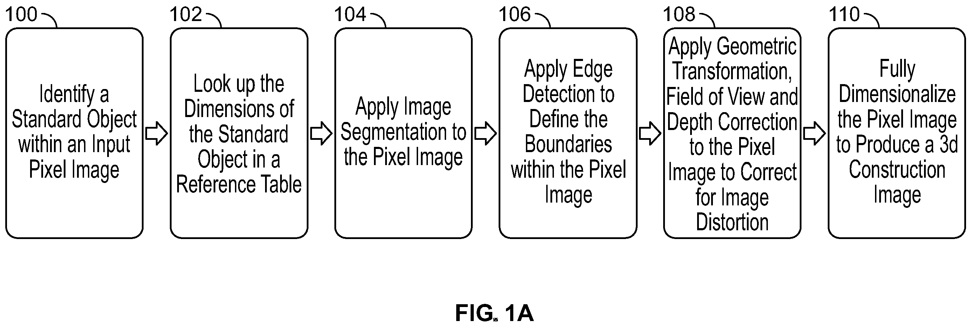

Figure 1A is a flow chart that depicts a method for converting pixel images into three-dimensional (3D) construction images in accordance with one embodiment of the instant invention. A computer vision system identifies an object of standard dimension within an input pixel image 100. The object of standard dimension may be construction products that have standard dimensions, like electrical wall plates. The dimensions of the object of standard dimension are looked up in a reference database 102 to provide dimensional details to portions of the input pixel image. Image segmentation is applied to the input pixel image 104 to segment the image and assign a label to every pixel in the image, such that pixels with the same label share certain characteristics. Edge detection is optionally used to further define the boundaries within the pixel image 106. Geometric correction transformation, field of view and depth correction are applied to the pixel image to correct image distortion 108 caused from perspective, shear and stretch of the identified objects within the pixel image. Finally, the pixel image is fully dimensionalized using the combined output of the identification and dimensionalization of the object of standard dimension, the image segmentation, the edge detection (if necessary), and the distortion correction to produce a 3D construction image 110. As can be appreciated by one skilled in the art, the method for converting pixel images produces a three-dimensional construction image as output based, at least in some embodiments, on a single pixel image provided as input.

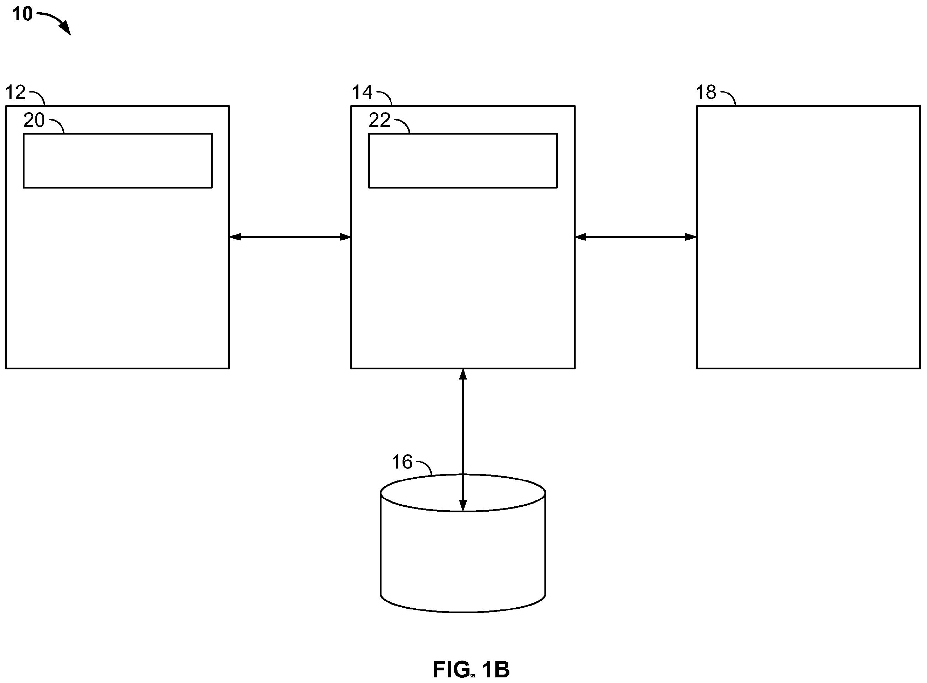

Figure 1B illustrates an exemplary system 10 for converting at least one pixel image, (e.g., digital images of room layouts or partial room layouts) into a 3D construction image using, for example, the method of Figure 1A. In one embodiment, the 3D construction image provides real-world dimensionality to enable construction ready use, based at least in part, on the input pixel images. System 10 includes an image acquisition engine 12, an image processing system 14, a reference database 16, and a 3D image output module 18. Image acquisition engine 12 acquires or is provided a representative pixel image 20 as input into system 10. In one embodiment, pixel image is acquired, downloaded or is an otherwise available digital image or alternatively is captured from a livestream. System 10 converts digital representations (pixel images) of usable space into data and dimensionalized construction information (e.g., 3D construction images) to significantly enhance the services provided in the construction industry and other adjacent industries.

As will be further described below, system 10 obtains one or more pixel images and dimensionalizes structures within such pixel images including, but not limited to, indoor and outdoor structures, construction objects, household objects, furnishings, and the like. By dimensionalizing such objects into real-world dimensions, system 10 provides useful 3D construction images as output in 3D image output module 18. Such 3D construction images provide the basis for a variety of use cases or business models including but not limited to rapid construction quotes; remodeling-as-a-product (including kitted quotes and block & made); home design services (solicited or advertised and unsolicited); insurance quotes or many other use cases. As one skilled in the art recognizes, certain embodiments of this invention are applicable to any use case wherein the contextual information such as dimension needs to be determined from a two-dimensional pixel image. As can be further appreciated, the instant invention is especially applicable when critical processes can be performed remotely, providing for quicker, higher quality and improved services by leveraging the input of pixel images and the output of 3D dimensionalized images. Many services in the construction industry are currently provided as one-time projects. The instant invention enables physical-space data creation and opens up significant new and improved business models, including lifetime customers relying on the accurate and up-to-date dimensionalized data provided about their respective property and the associated improved services enabled.

In an exemplary embodiment, a digital pixel image of an indoor room layout is obtained or acquired by (or user-provided to) image acquisition engine 12. As discussed above, a plurality of readily available repositories of existing digitally formatted home images or indoor room layouts exist because of the burgeoning online real estate market. Because such readily available pixel images can have a number of variables including the angle, height, tilt and distance that the camera was positioned at when the image was captured, image processing system 14 may apply a number of additional techniques to improve the accuracy of the dimensioning that occurs in 3D image output module 18 because of such geometric distortions.

In one embodiment, the image processing system 14 identifies objects, including objects of known dimensions (such as construction products that have standard dimension, like electrical wall plates). Additionally, image processing system 14 further performs object segmentation to encompass each pixel within the obtained pixel image. Additionally, image processing system 14 determines edges that are present within the pixel image. Next, image processing system leverages the output of the object detection, object segmentation and the edge detection to develop a combined output that is a universal representation of the pixel image. The combined output provides a recognition of the objects within the pixel image, relative positions of such objects and the corresponding pixels associated with such objects, which combine to output a dimensionalized and real-world geometric representative 3D construction image in 3D image output module 18.

In order to accurately determine the pixel dimensions and real dimensions of the underlying and identified objects, however, image processing system 14 associates the identified objects with actual dimensions through reference database 16 and determines the angle, height and distance of the identified objects with respect to the camera position. In one embodiment, image processing system further performs geometric correction to determine perspective, shear and stretch of the identified objects within the pixel image. The geometric correction technique, once applied, provides image processing system 14 with the angle of view, the height, distance and tilt of the camera used to capture the pixel image. System 10, then combines the combined output as a universal representation of the pixel image with the dimensions of the objects from reference database 16 and the geometric correction results to produce a fully dimensionalized 3D construction image in image output module 18.

In one embodiment, the pixel image obtained in image acquisition engine 12, is a digital image of at least a portion of a room layout. In another embodiment, the pixel image is a digital image of a house or apartment layout. In yet another embodiment, the pixel image is a single-family, multi-family or commercial floorplan. As briefly discussed above, a significant number of digital pictures, photographs, floor plans for homes, multi-family properties, condominiums, commercial real estate units, industrial layouts or other floor plans are available online. The vast majority of these digital pictures, photographs and floorplans exist as pixel images. Each of these images, either individually or in combination, can be used as representative pixel image for image acquisition engine 12. In one embodiment, the pixel image is acquired in image acquisition engine 12 by ingesting an online or downloaded image of a room layout, a house layout, a floorplan, or the like. In another embodiment, the pixel image is provided by a user. In yet another embodiment, the pixel image is acquired by a digital camera or other image capture device. In another embodiment, the pixel image is auto acquired using standard search engine techniques, web-scraping or similar acquisition technologies including by leveraging indicia provided by a user, such as an address. For example, a user types in an address into a search engine and available images associated with such address are ingested into the image acquisition engine 12. In yet another embodiment, pixel image is captured from a livestream.

In one embodiment, an object detection model 22 is used to process images in order to tag various objects present within the pixel image. The output of such object detection model 22 may include, but is not limited to, the name of the detected object and normalized coordinate points that define a bounding box around the object. For each detected object, there will be four normalized coordinates in the response including minimum x, minimum y, maximum x and maximum y.

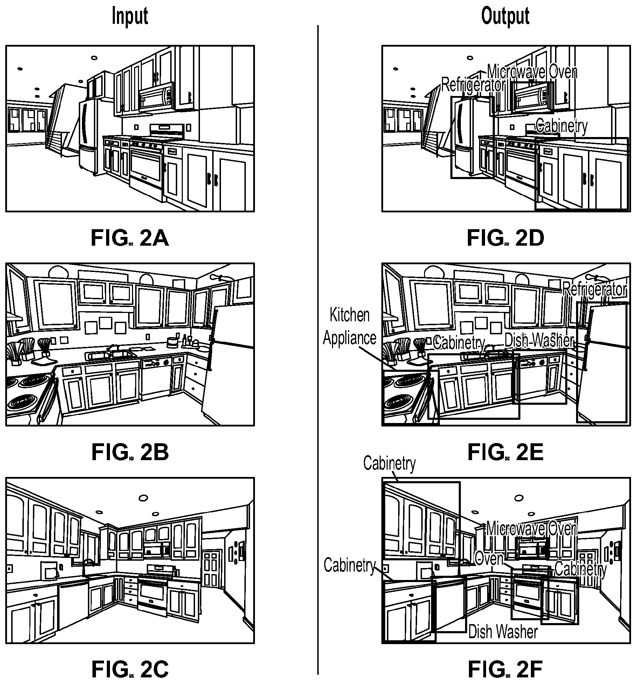

Exemplary pixel images in Figures 2A, 2B and 2C are provided as input. Corresponding output objects are shown in Figures 2D, 2E and 2F. The output objects include identified objects including a microwave, a dishwasher, a refrigerator and an oven. Each identified object is labeled, and normalized coordinate points are shown that at least partially define a bounding box around the object. Furthermore, in certain embodiments, real coordinates of a respective image are derived from the normalized coordinate, height and width of the pixel image. Real coordinates can be applied on the image and by connecting the real coordinates, a bounding box is generated around the object.

In yet another embodiment, image processing system 14 may include a method of detecting one more object(s) of standard dimension, for example a standard construction object such as a single-gang wall switch plate. In one embodiment, object detection module 22 comprises a computer vision machine learning module that is trained to detect objects of standard dimension through a process of tagging such objects of standard dimension within a plurality of training images and feeding such tagged training images into an object detection model, thus training the model to accurately identify such objects of standard dimension. The object detection model learns based on the training data and then applies such learning to pixel images to identify object(s) of standard dimension. Accordingly, after ingesting such training images of objects of standard dimensions, an exemplary object detection module 22 identifies if a respective pixel image contains an object of standard dimension, such as, but not limited to, a wall plate, kitchen base cabinets, kitchen wall cabinets, or other objects of standard dimension as further discussed herein.

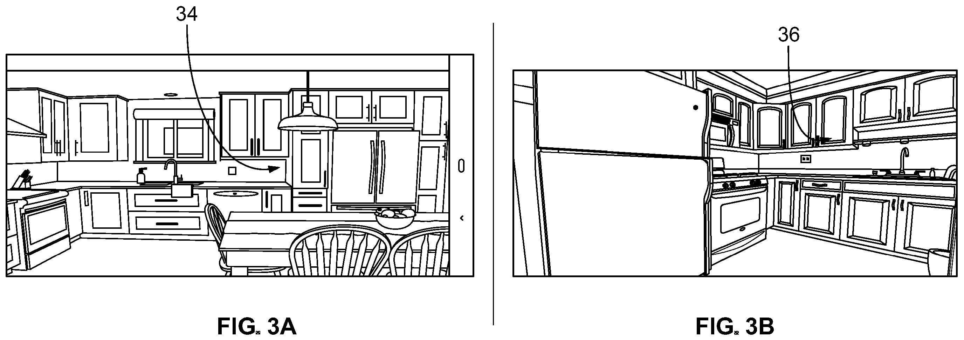

Figures 3A and 3B are exemplary pixel images that include object detection output of wall plate objects 34 and 36 of standard dimension. Object detection output identifies a US Type B wall outlet 34 having known real-world dimensions of 2.75 inches wide and 4.5 inches high. Likewise, object detection output relevant to the image of Figure 3B includes an identified double-gang wall plate 36 having known real-world dimensions of 4.56 inches wide and 4.5 inches high. Each identified object is labeled, and normalized coordinate points are shown that at least partially define a bounding box around the object. Furthermore, in certain embodiments, real coordinates of a respective image are derived from the normalize coordinate, height and width of the pixel image. Real coordinates can be applied on the image and by connecting the real coordinates, a bounding box is generated around the object. In one embodiment, a trained object detection model can be deployed in a cloud environment. In one embodiment, the deployed object detection model exposes REST endpoint for consumption to or integration with other services. The endpoint is used to invoke the object detection model and provide the results for the user-provided images.

In the instant invention, an orthogonal picture can be measured quite accurately without deploying significant additional techniques such as object segmentation. However, the pixel image may still require geometric corrections such as correction based on the distance of the objects plane versus the standard object and correction based on field of view of the camera. For example, in an exemplary pixel image taken by an image capture device orthogonal to the captured image, image processing system 14 can apply real-world dimensions to identified objects of known dimension such as a dishwasher (24 inches wide) and a countertop (36 inches high). By leveraging the details of the identified objects of known dimensions, image processing system 14 can calculate the width and height of all objects within the photo. Additionally, by leveraging known depth dimensions of objects of standard dimension such as upper cabinets (12 inches deep) and lower cabinets (24 inches deep), image processing system can calculate the third dimension of the image.

One of the challenges faced with applying a standard object detection approach is that a bounding box placed around the object is a rectangle or square. Certain commoditized bounding box models typically only serve the purpose of object detection or identification. Even if the bounding box were not rectangular or square, conventional object identification techniques do not provide any other information or details about the identified object.

In many cases, however, the image of the pixel image (for example of a kitchen or a bathroom) may contain more than one plane, the object of the image may be sheared or stretched, or the parallel edges of the object may not appear to be parallel. This is caused by a projected deformation of the image, caused by the viewing angle, height, tilt of camera and the distance of the object from the camera. Basically, the pose/3D orientation of the camera with respect to the 3D object in a 3D coordinate reference plane produces image deformation.

In order to calculate dimensions, in some embodiment of the instant invention, a more exact geometry of the object is required. In one embodiment, object detection module 22, locates a respective object with its position but requires additional processing in order to determine the exact geometry as the object is slanted at a certain angle or is otherwise geometrically distorted. Certain computer vision models, such as Google GCP's AutoML and Amazon AWS's Sagemaker are conventional but have inadequate object identification capabilities. Such models are built for the purpose of object classification, wherein a labeled or tagged training dataset can be used to train a machine learning model. The bounding box used for tagging the objects in an image helps localize the training models to look for features within the bounding box for object identification. These conventional models, however, lack the specificity and context, required to provide a fully dimensionalized 3D construction image as an output.

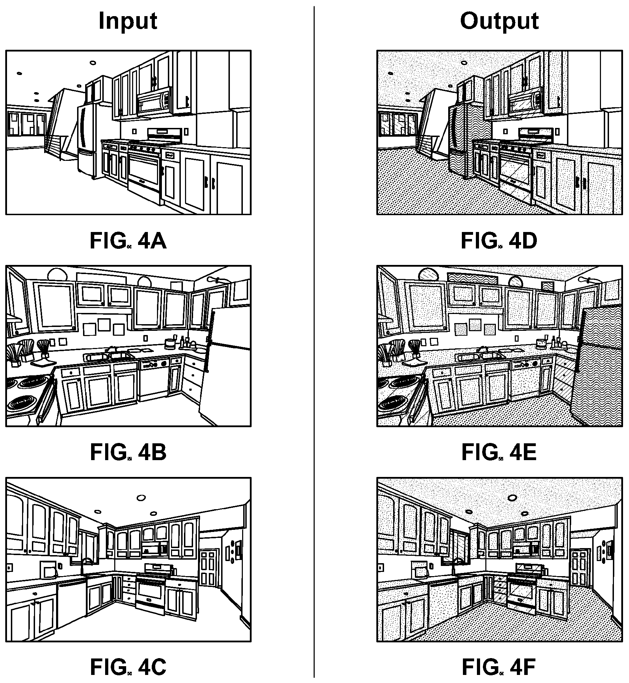

As discussed above, a respective pixel image includes many variables including but not limited to the pan, tilt, angle, height and distance that the image capture device was relative to the image as captured. In yet another embodiment, image processing system 14 further comprises an object segmentation technique to partition a pixel image into multiple segments. Object segmentation input is shown in Figures 4A, 4B and 4C and corresponding outputs are shown in Figures 4D, 4E and 4F. Object segmentation classifies the object based on every pixel in the object. This enables a capture of the shape information of the object, and every object in the image is than masked with unique indicia (e.g., crosshatching or color pixel). One of the challenges of conventional semantic segmentation is that objects with same or similar pixel information are all considered as part of the same segment. For example, if a wall in the image is almost the same pixel color and similar contrast as an adjacent wall, a semantic segmentation model cannot differentiate the two. The instant invention provides additional information, such as object dimensions, geometric properties of identified objects and object to object relative alignment (walls intersect at 90°) to enhance the segmentation model and results.

The goal of segmentation is to simplify or change the representation of an image into something that is more meaningful and easier to analyze. Object segmentation is typically used to locate objects and boundaries in images. More precisely, object segmentation is the process of assigning a label to every pixel in an image such that pixels with the same label share certain characteristics. This enables a clear definition of an object with clearly isolated boundaries. The result of image segmentation is a set of segments that collectively cover the entire image, or a set of contours extracted from the image. Each of the pixels in a region are similar with respect to some characteristic or computed property, such as color, intensity, or texture. Adjacent regions are significantly different with respect to the same characteristic(s). In one embodiment, image processing system 14 applies a pixel smoothening technique to reduce the noise by leveraging an averaging of nearest neighbor pixels.

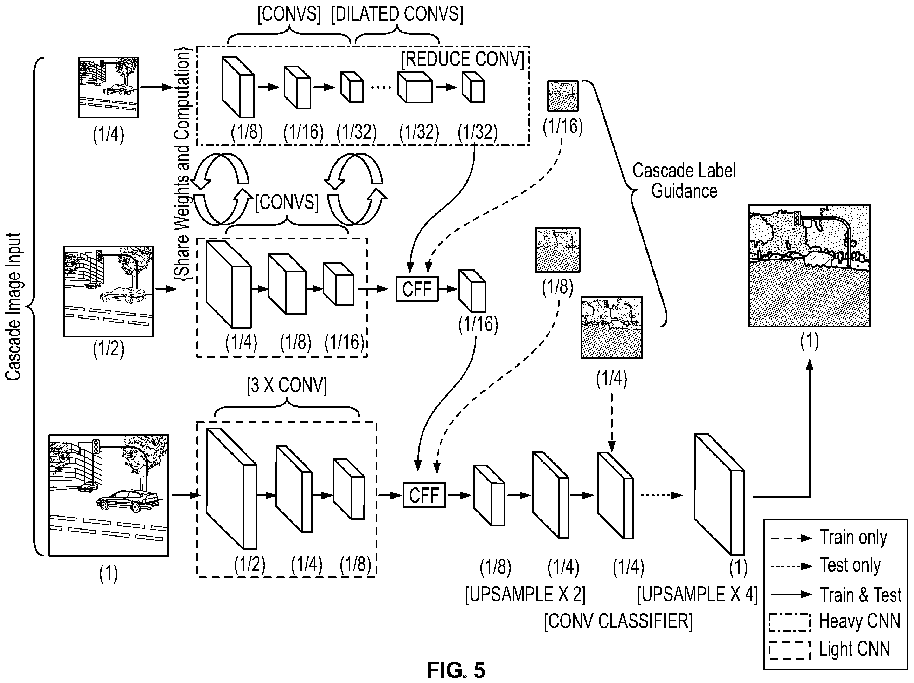

In one embodiment of the instant invention, several object segmentation methodologies were used and trained including ICNET, Pyramid Scan Parsing Network (PSP Net), and Deeplab V3. ICNET incorporates effective strategies to accelerate network inference speed without sacrificing significant performance. ICNET also includes a framework for saving operations in multiple resolutions. ICNET uses time budget analysis as it takes cascade image inputs, adopts cascade feature fusion unit and is trained with cascade label guidance. ICNET is pictorially depicted in Figure 5.

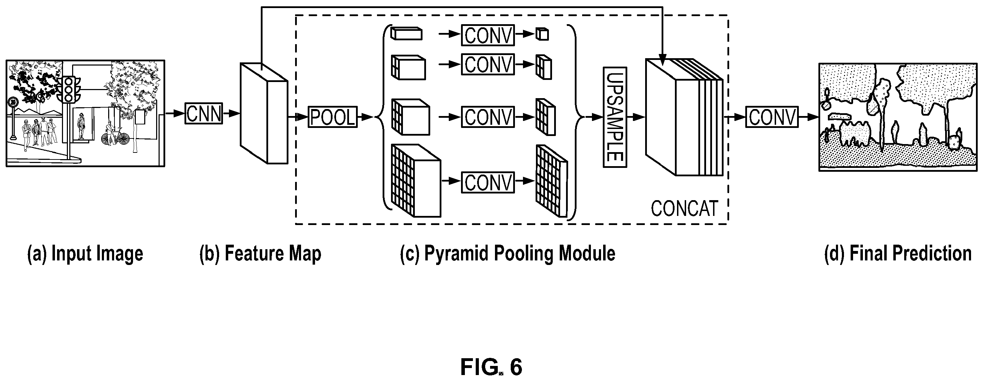

PSP Net is used for more complex scene parsing. The global pyramid pooling feature of PSP Net provides additional contextual information and useful strategies for scene parsing as it incorporates effective strategies to accelerate network inference speed without sacrificing significant performance. It also includes a framework for saving operations in multiple resolutions. PSP Net is pictorially depicted in Figure 6. Pyramid Scene Parsing Network uses global pyramid pooling module in which the local and global clues together make the final predictions.

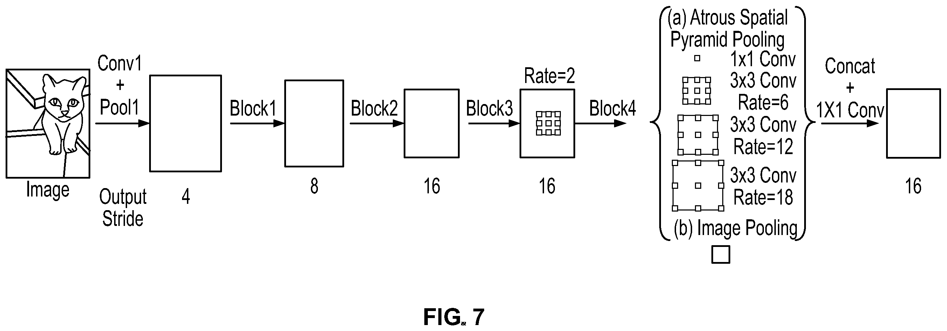

Deeplab v3 uses atrous convolution, a powerful tool to explicitly adjust a filters field-of-view as well as control the resolution of feature responses computed by Deep Convolutional Neural Networks. Deeplab v3 also solves the problem of segmenting an image at multiple scales. Deeplab v3 combines several powerful computer vision and deep learning concepts such as spatial pyramid pooling, encoder-decoder architectures and atrous convolutions. Deeplab v3 is pictorially depicted in Figure 7.

As previously explained, because of the significant variation of pixel images input into image processing system 14 (FIG. 1B), image segmentation may, in some embodiments, also require additional processing due to difficultly in ascertaining object boundaries within a respective image. During object segmentation a class is assigned to each pixel in an image. This assignment may sometimes overflow or underflow an object boundary. In one embodiment, edge detection is also utilized to compliment image segmentation to identify all the objects in a given image, even though certain pixels of a respective object may have little contrast and may not be segmented well with a more conventional object segmentation model. In order to derive exact boundaries around the object, potential edges of the object are identified by using edge detection model.

In yet another embodiment, image processing system 14 further comprises edge detection that identifies points in a pixel image at which image brightness changes sharply or has discontinuities. The points at which image brightness changes sharply are typically organized into a set of curved line segments termed edges. One additional way to improve the detection of an object is using an edge detection model. An edge detection model performs a pixel by pixel comparison of objects in an image. The edge detection model focuses on identification of changes in pixel while traversing along the pixel rows and columns in an image, to classify the same as an edge. Another edge detection model uses changes in the pixel intensity to identify the edge. The edge is detected by fitting a Gaussian distribution near the edge. There are parameters to the intensity Gaussian distribution at the edge using an upper threshold, lower threshold and sigma. Other than the maximum intensity, all other pixels are replaced with a black pixel (or ignored). Once the entire image is processed, every object edge is precisely defined. One of the challenges of conventional edge detection model is that other contextual information on the object is typically lost, as only the edge is retained. Combining object segmentation and edge detection within the instant invention enables, edge detection and retained contextual information with the image of the object. As discussed, object detection is used on pixel image to place a bounding box and identify a reference object. Once an object is identified and edges are clearly defined (using a combination of multiple techniques) geometrical models for perspective correction, and image distortions due to field of view of the camera are applied. The real world known dimensions of the reference image are used to estimate the true pixel to dimension aspect ratio. Measurement of any other object or dimension of the known pixel dimension can then be converted into real world dimensions by combining the output of these techniques.

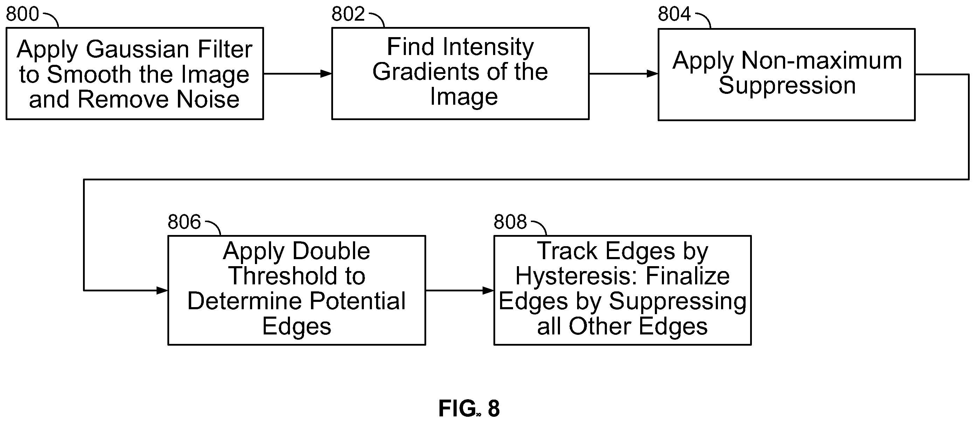

In one embodiment of the instant invention, a Canny Edge Detection Model is used to detect a wide range of edges in an exemplary pixel image. One example of a Canny Edge Detection Model, in accordance with this invention, is depicted in Figure 8. A Gaussian filter is applied to smooth the image and remove noise 800. Intensity gradients are identified in the image 802. Non-maximum suppression is applied 804. A double threshold is applied to determine potential edges 806. Edges are tracked by hysteresis and edges are finalized by suppressing all other edges 808.

The edge detection model calculates edges and highlights the edges with increased brightness levels. This output is initially stored as an image. This output is further read with standard JPEG or PNG read operations and pixel level information is derived. The pixel level information contains numeric values associated with each pixel in the image. ((Example values: 255, 42929672956) derived with threshold: 50 and Gaussian blur: 50)). The values are further simplified into binary values 0 or 1. Where 1= edge present and 0= edge not present. The pixel level information is further used in combination with other model output, including but not limited to, image segmentation.

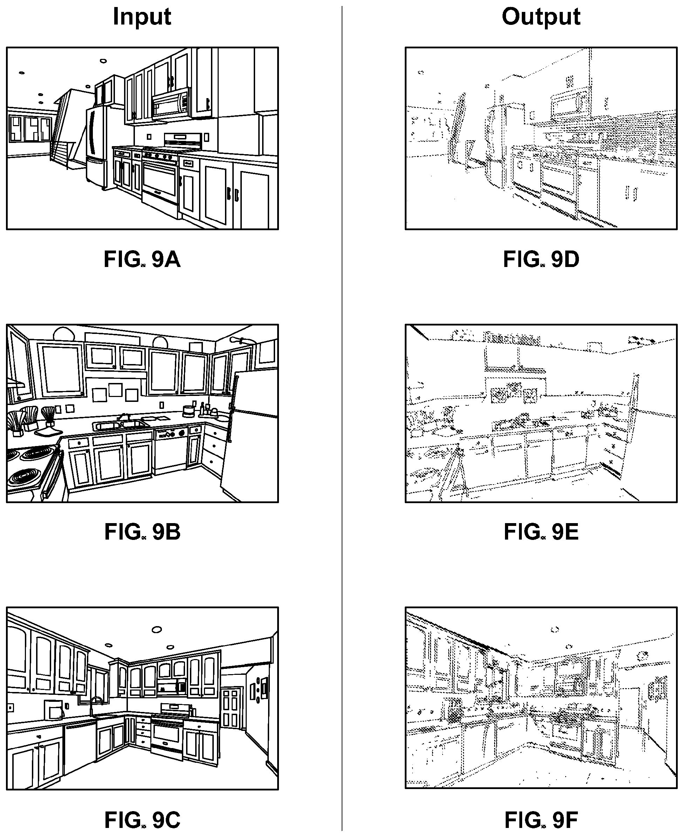

In yet another embodiment of the instant invention, image processing system 14 leverages output of object detection, object segmentation and edge detection techniques to develop a combined output as shown in Figures 9D, 9E and 9F, which combined output is a universal representation of corresponding pixel images of Figures 9A, 9B and 9C. The combined output provides a recognition of the objects within the pixel image, relative positions of such objects and the corresponding pixels associated with such objects.

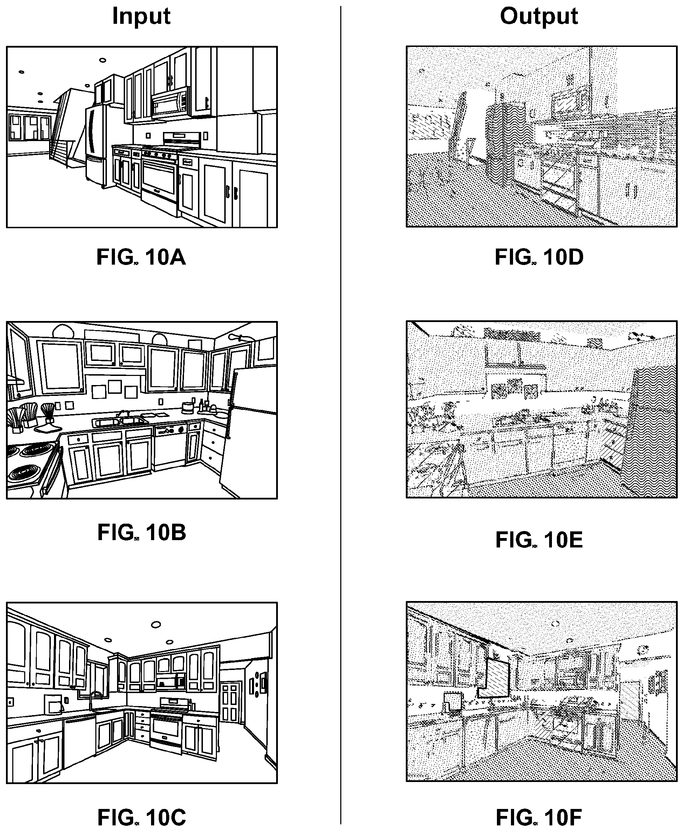

In yet another embodiment of the instant invention, image processing system 14 uses reference database 16 (Fig. 1B) and geometric correction to dimensionalize a pixel image and produce a geometrically corrected dimensionalized 3D construction images as shown in Figures 10D, 10E and 10F, which respectively correspond to input Figures 10A, 10B and 10C.

In order to accurately determine pixel dimensions and real dimensions of underlying and identified objects, image processing system 14 (Fig. 1B) associates such identified objects with actual dimensions through reference database 16. Additionally, image processing system 12 determines the angle, height and distance of the identified objects with respect to the camera position. In one embodiment, image processing system 14 performs geometric correction to determine perspective, shear and stretch of the identified objects within the pixel image. The geometric correction technique, once applied, provides image processing system 14 (Fig. 1B) with the angle of view, the height, distance and tilt of the camera used to capture the pixel image. In one embodiment, system 10, combines the combined output as a universal representation of the pixel image with the dimensions of the objects from reference database 16 and the geometric correction results to produce a fully dimensionalized 3D construction image in image output module 18.

As discussed above, a respective pixel image includes many variables including but not limited to the pan, tilt, angle, height and distance that the image capture device was relative to the image as captured. In yet another embodiment, image processing system 14 further comprises additional processing techniques to geometrically correct distortion within a representative image. As previously discussed, with the combination of object detection, image segmentation, and edge detection, imaging processing system 14 identifies certain objects in the pixel image as well as the relative position of such objects, segments the pixel image to more accurately associate pixels with such identified objects and leverages edge detection to more clearly define the boundaries of such objects. In one embodiment of the instant invention, to more accurately calculate pixel dimensions and correspondingly real dimensions of identified objects and ultimately total image characteristics of the pixel image, the angle of the object with respect to the camera position is calculated and more accurate boundaries around the objects are determined.

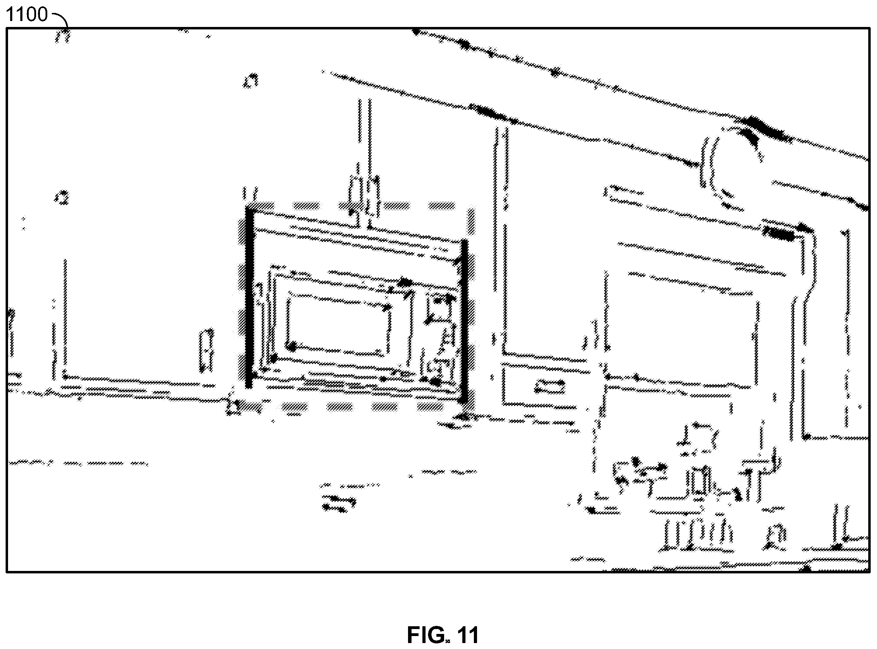

In one embodiment, as shown in Figure 11, from an initial object detection output from image processing system 14, bottom left corner of a representative object can be determined. Figure 11 illustrates a microwave with a digital perimeter 1100. In one embodiment, image processing system 14 (Fig. 1B) identifies such bottom left corner of the object as origin point (x=0, y=0). Next image processing system pixel walks in a vertical (y) direction of the pixel image until image processing system 14 identifies a pixel that intersects with an edge. From this traversal, image processing system 14 identifies two coordinates, origin coordinate (0,0) and destination coordinate (0,y'), with y' representing a vertical pixel coordinate great than 0. Next, image processing system 14 determines a representative left vertical edge of an identified object within a pixel image by plotting a line between (0,0) and (0,y'). A representative right vertical edge is similarly established by following the same process but taking bottom right corner of the object as the origin coordinate. As can be best appreciated by continued reference to Figure 11, as shown image processing system 14 (Fig. 1B) has an identified object with an associated and geometrically inaccurate bounding box, a series of clearly identified edges that more accurately identify clear edges of such identified objects with other objects and portions of the representative pixel image, and left and right vertical edges of the identified object that more accurately reflect the boundaries of the identified object by correlating the identified object, the associated object segmentation and edge detection. As shown, image processing system 14 (Fig. 1B) identifies one or more angular offsets, for example, $(\alpha, \beta)$ between the original bounding box associated with the identified object and the more accurately calculated vertical edges of such object. The angular offsets are used by image processing system 14 to more accurately assess the necessary geometric correction required of the input pixel image by using the angular offset to determine the angle of view, height and tilt of the image capture device used to collect the pixel image. In another embodiment, image processing system 14 also determines the actual dimensions of the left and right edges of the identified objects (objects of known dimension) through reference database 16 and uses such known dimensions in combination with the identified angular offset to determine the angle of view, height and tilt of the image capture device used to collect the input pixel image. In yet another embodiment, image processing system 14 determines that an identified object has known geometric attributes (such as a known angle of identified edges), including but not limited to a known shape (square, rectangle), a known planer consistency, or other recognizable geometric attributes, typically through reference database 16, and uses such known geometric attributes in combination with the identified angular offset to determine the angle of view, height and tilt of the image capture device used to collect the input pixel image. In yet another embodiment, image processing system 14 determines that there are two walls identified in a representative pixel image and leverages an assumption that walls intersect at a corner and the angle of intersection is typically a right angle (90°) and uses this as another input to determine the angle of view, height and tilt of the image capture device used to collect the input pixel image. The angular offset is used to determine and establish an adjusted digital perimeter.

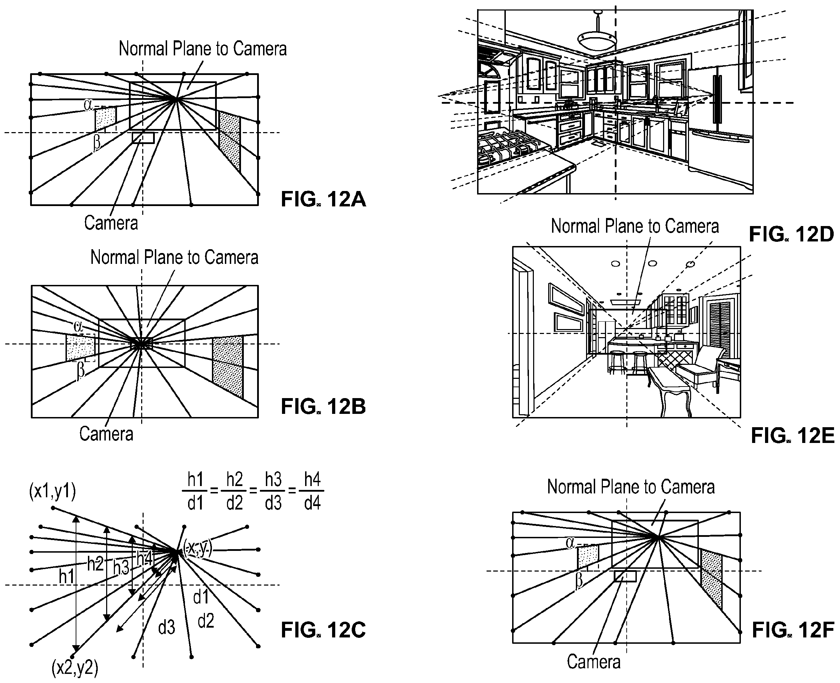

In yet another embodiment of the instant invention, a projective transformation method is used by image processing system 14 for correction of perspective, shear or stretch of identified objects in an input pixel image. The use of this geometric correction also gives us angle of view, height and tilt of the camera. Some examples are shown in Figures 12A, 12B, 12C, 12D, 12E and 12F. The projection matrix is used to calculate transformed coordinates to get a projective image. A projective transformation projects every figure into a projectively equivalent figure, leaving all its projective properties invariant. Planar projective transformation is a linear transformation on homogeneous 3-vectors represented by the following non-singular $3 \times 3$ matrix

$$\begin{pmatrix} x_1' \\ x_2' \\ x_3' \end{pmatrix} = \begin{bmatrix} h_{11} & h_{12} & h_{13} \\ h_{21} & h_{22} & h_{23} \\ h_{31} & h_{32} & h_{33} \end{bmatrix} \begin{pmatrix} x_1 \\ x_2 \\ x_3 \end{pmatrix},$$

where x[1, 2 & 3] are 3D coordinate variables, h is the transformation coefficient determined from the epipolar, and x'[1, 2 & 3] are the transformed coordinate variables.

A section of the image is selected that corresponds to a planner section of the world. Local 2D image and world coordinates are selected from original image. Let the inhomogeneous coordinates of a pair of matching points x and x in the world and image plane be (x, y) and (x', y') respectively. The projective transformation of the same can be written as:

$$x' = \frac{x_1'}{x_3'} = \frac{h_{11}x + h_{12}x + h_{13}}{h_{31}x + h_{32}x + h_{33}} \text{ and } y' = \frac{x_2'}{x_3'} = \frac{h_{21}x + h_{22}x + h_{23}}{h_{31}x + h_{32}x + h_{33}}.$$

Each point correspondence generates two equations for the elements of h, which after multiplying are:

$$x'(h_{31}x + h_{32}y + h_{33}) = h_{11}x + h_{12}y + h_{13}$$

and

$$y'(h_{31}x + h_{32}y + h_{33}) = h_{21}x + h_{22}y + h_{23}.$$

These equations are linear in the elements of h. Four-point correspondence lead to eight linear equations in the entries of h, which are sufficient to solve for h up to an insignificant multiplicative factor.

Once the image is flattened based on standard object, pixel/inch aspect ratio is calculated by using known real dimensions (inches) and image dimensions (pixels) of the standard object. Pixel dimensions of a desired object are calculated by taking the difference of the x-axis values of top right corner and top left corner of the object for width and by taking the difference of y-axis values of bottom left corner and top left corner for height. Using the pixel/inch aspect ratio calculated and the real-world dimensions of identified objects of standard dimensions from reference database 16, the actual dimension of the desired object is calculated by multiplying pixel dimensions of the desired object with the associated pixel/inch ratio.

Referring once again to Figure 1B, in one embodiment, image acquisition engine 12 includes an image capture module 20, wherein a user identifies a pre-existing pixel image. The pre-existing pixel image can be an image provided directly by a user, a pre-existing pixel image identified on the Internet or within a public or private database by the user, or a pixel image auto-identified by system 10, based on user-identified indicia such as the address or other criteria, or otherwise acquired or built by the user or system by leveraging other methodologies.

In one embodiment, image processing system 14 processes a pixel image from image acquisition engine 12 and identifies object(s) of standard dimension and segments and dimensionalizes the objects of standard dimension using reference database 16. In one embodiment, the object of standard dimension is a standard construction object. In another embodiment, the object of standard dimension is an identifiable object with known dimensions, such as an identifiable household object of known dimensions. For example, image processing system 14 identifies a standard construction object, such as a single-gang wall switch plate, and uses reference database 16 to identify the dimensions of the single-gang wall switch plate as inputs into 3-D output module 18. In yet another embodiment, the object of standard dimension is a grocery item or store shelf item such as cans of fruit, vegetables, bottles or cans of beer or other store items. As can be appreciated, the instant invention can be used to provide inventory assistance by determining inventory needs from a single digital image.

In one embodiment, image processing system 14 further comprises an object detection module 22 that detects objects of standard dimension. In one embodiment, object detection module 22 comprises a computer vision machine learning module that is trained to detect objects of standard dimension by a process of tagging such objects of standard dimension within a plurality of training images and feeding such tagged training images into the object detection module 22, thus training the module 22 to accurately identify such objects of standard dimension. The object detection module 22 learns based on the training data and then can be applied to images provided or identified within the image acquisition system 12 containing such object(s) of standard dimension that are not tagged. Accordingly, after ingesting such training images of objects of standard dimensions, an exemplary object detection module 22 can identify if a respective image contains an object of standard dimension such as an oven, a microwave, an outlet and the like.

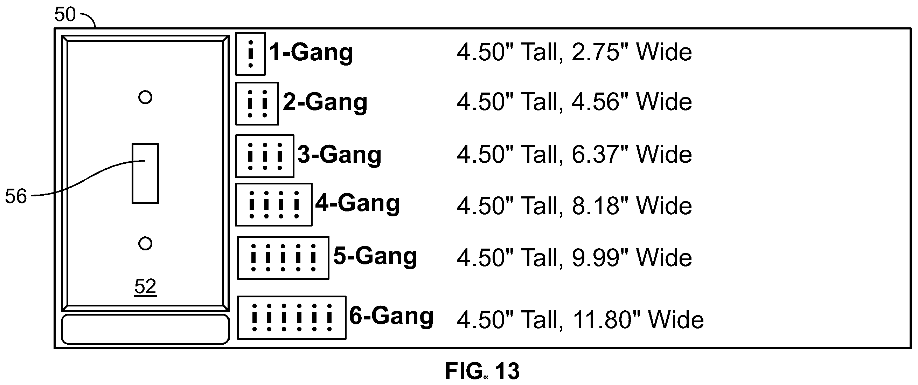

As shown in figure 13, certain exemplary standard construction objects 50 have known dimensionality. For example, at least in the United States, a single gang wallswitch plate standard size is nominally 2.75 inches wide by 4.5 inches tall and two-gang, three-gang and larger switch plates also have known and have generally fixed dimensions. Similarly, regions throughout the world have standard dimensions on similar fixtures. Other examples of standard construction objects 50 of known dimensionality include, but are not limited to electric plugs, switches, toggles, paddles, plates, molding, jams, window, doors, tiles, roof tiles, gutters, hinges, siding, phone jacks including RJ11, doorknobs and the like. As one skilled in the art will appreciate, the list can further include both current or historical construction objects of known dimensions or can include construction objects developed in the future that have standard or known dimensions. The more complete the list of standard construction objects that are introduced into object detection module 22 as training images and associated with known dimensions stored in reference database 16, the better the image processing system 14 will be able to incorporate and provide as inputs into the 3D output module 18.

Many standard construction objects are electrical devices. In the US, for example, the size and structure of these electrical devices are generally governed by a nongovernment industry lobbying group called National Electrical Manufacturers Association (NEMA). NEMA regularly publishes the equivalent of a national electrical code, which by practice is frequently adopted by state and local governments as the local or state-wide electrical code. The majority of these electrical devices have published and agreed upon dimensions, and occasionally coloring, or other characteristics that ensure industry-wide and country-wide interoperability. As mentioned, in the United States, building codes are a responsibility of state and local government. Other countries may have federal level codes; however, all developed countries have the equivalent of NEMA to ensure among other things that electrical plugs work in all parts of each respective region or country.

Standard construction objects include US Type A and US Type B, switches, toggles, paddles, wall plates including single gang, double gang, three gang, 4-gang, 5-gang, etc. Other examples of standard construction objects having known dimensionality include, but are not limited to, fire alarms, carbon monoxide detectors, interior moldings, door jams, door hinges, downspout, cabinets, bolt covers for floor mounted toilets, flex cold water hose for toilets, bar and countertop heights, exterior moldings and the like. In another embodiment, standard construction objects are identified using a brand, serial number, image matching, model number or combinations thereof.

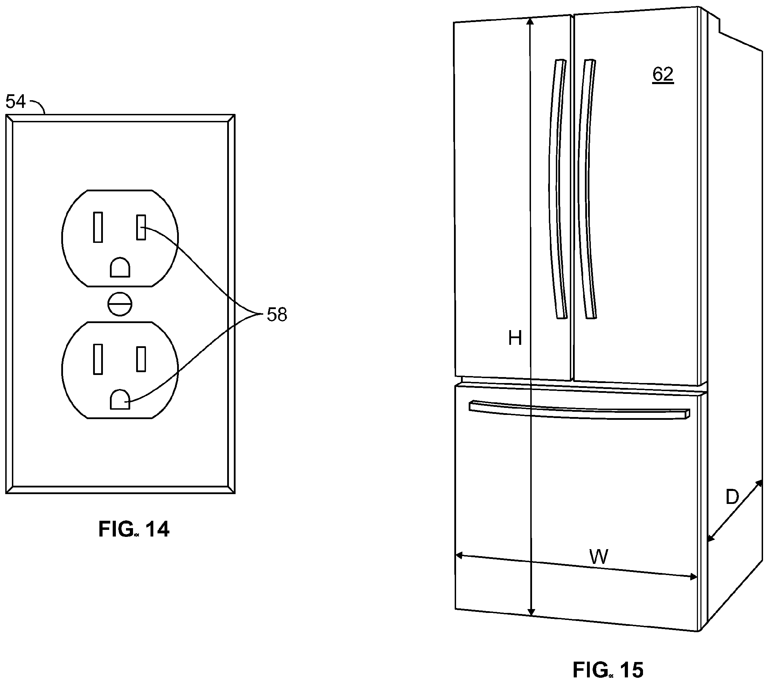

As shown in Figure 13, one example of a standard construction object is a wall plate 52. Wall plate(s) 52 come in three sizes, standard, mid-way or preferred (3/8" larger on all sides than standard) and jumbo (3/4" larger on all sides than standard). Such wall plates 52 are used for switches, outlets and other connections but are consistent in dimensions. In one embodiment of the instant invention, wall plate 52 (Fig. 13) and outlet wall plate 54 (Fig. 14) are examples of standard construction objects 50 that assist in determining image dimensionality. Wall plates 52, 54 have a very high likelihood of having at least one and typically many occurrences in existing or acquired pixel room images. When combining the frequency of the wall plates 52, 54 being an identified standard construction object 50 and that the dimensions are well known and have only minimum variation, the wall plates 52, 54 may have a weighted and important impact as inputs into 3-D output module 18. In yet another embodiment, electrical switch 56 (Fig. 13) and the electrical plug 58 (Fig. 14) are identified as construction objects of known dimension as inputs into the 3-D output module 18 (Fig. 1B) either individually or, in one embodiment, as a method to determine if the wall plates 52, 54 are Standard, Mid-way, or Jumbo dimensions. All electrical switches 56 and electrical plugs 58 have standard dimensions in the United States and therefore may have a weighted impact in determining image dimensionality within a respective image.

As shown in Figure 15, certain identifiable objects 60 have known dimensions. For example, certain home identifiable objects including appliances such as refrigerators (as shown) floor ovens, wall-mounted ovens, hoods, microwaves, dishwashers, and refrigerators have standard dimensions. In addition, other everyday items have known standard dimensions such as such as toilet paper, paper towels, and other common household items. Other common identifiable objects 60 of known dimensions are counter tops (always 36 in from the floor to top of countertop), base cabinets toe kicks, wall cabinets, and the like.

For example, as shown in Figure 15, an identifiable object is a refrigerator 62 having known dimensions such as width (W), height (H), and depth (D). The more complete the list of certain identifiable objects that are introduced into object detection module 22 as training images and associated with known dimensions (W, H, D of Fig. 15) stored in reference database 16, the better the image processing system 14 will be able to incorporate and provide as inputs into the 3D output module 18.

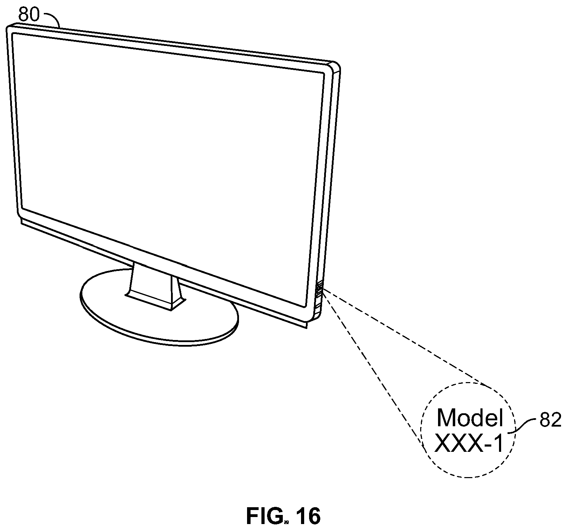

In another embodiment, as shown in Figure 16, object 80 is identified using identifiable indicia 82 such as a serial number, a model number, a brand, or the like or combinations thereof.

Referring once again to Figure 1B, in one embodiment, one or more pixel images are acquired from at least one and typically a combination of sources. For example, a pixel image may be optionally acquired from one or more residential real estate photo repositories including but not limited to online real estate sites. These online real estate site images are typically generated and provided when people buy or sell their homes and are posted on the multi-listing service (MLS) and replicated through other real estate websites such as, but not limited to, Zillow, Redfin, Trulia and the like. There are approximately four to five million digital images of new and used homes per year posted online and an estimated sixty million historical digital images available and growing.

In yet another embodiment, commercial, multi-family, and industrial real estate has architectural floor plans of their buildings, irregularly formatted floor plan sketches and outlines, and may have other sources of existing photos. In certain embodiments of the current invention, floor plans of any format and photos are obtained from a property owner or manager and ingested into image acquisition engine 12. In yet another embodiment, homeowners, renters, landlords, tenants, investors, professional photography services or others take "flat" 2D photos or pixel images or augmented reality scans of homes, apartments, and commercial spaces and provide them for the image acquisition engine 12 to ingest. In yet another embodiment of the invention, additional means are utilized to dimensionalize rooms including but not limited to LIDAR scans, laser measurements, radar, ground penetrating radar, other purpose-built scan or measuring tools, or satellite images. Additionally, pre-segmented images can be provided to the image acquisition engine 12 to ingest, thereby simplifying the required processing.

As discussed above and as referenced in Figure 1B, in one embodiment, object detection module 22 comprises a computer vision machine learning module that is trained to detect objects of standard dimension by a process of tagging such objects of standard dimension within a plurality of training images and feeding such tagged training images into the object detection module 22, thus training the module 22 to accurately identify such objects of standard dimension. The object detection module 22 learns based on the training data and then can be applied to images provided or identified within the image acquisition system 12 containing such object(s) of standard dimension that are not tagged. Accordingly, after ingesting such training images of objects of standard dimensions, an exemplary object detection module 22 can identify if a respective image contains an object of standard dimension such as an oven, a microwave, an outlet and the like. In one training embodiment, a series of approximately one thousand photos of kitchens were manually tagged to identified certain standard construction objects or objects of known dimension. Each standard construction object or object of known dimension (like electrical outlets, ovens, refrigerators, etc.) had between about two hundred times to about four hundred instances. The tagged images were ingested by the object detection module 22, which learned to recognize the patterns associated with each tagged object. Next, the recognized patterns were compared to objects within the reference database 16 to identify the dimensions of the recognized patterns, as at least one reference measurement, and then using the known dimensions to build measurements of the remainder of the ingested photo.

In one embodiment, system 12 does a best-fit approach to correlate between multiple objects of standard dimensions. The system 12 uses the best-fit approach to back test the results within itself to optimize the total results to yield a more accurate 3D construction image. One technique involving best-fit approach to multiple objects is electrical wall plates. Wall plates, in the United States, come in three different standard sizes - standard, mid-way (also called preferred), and jumbo. The three sizes are standard, but it is not always obvious which one of the standard sizes is in a digital photo. The electrical plugs and switches, however, only have one standard size (a US electrical plug works in every outlet in the US). Accordingly, in the case of wall plates, the imaging processing system 12 makes a determination if the photo has enough resolution to clearly see the plug or switch, then determines the size of the wall plate by associating the size of the plug or switch to the size of the wall plate, and then third uses the wall plate as the standard object to help determine the size of the remainder of the room. If a photo does not have enough resolution to clearly view the plugs, the system iterates between the three sizes of wall plates by prepopulating a wall plate size and then determining if the remainder of the photo fits.

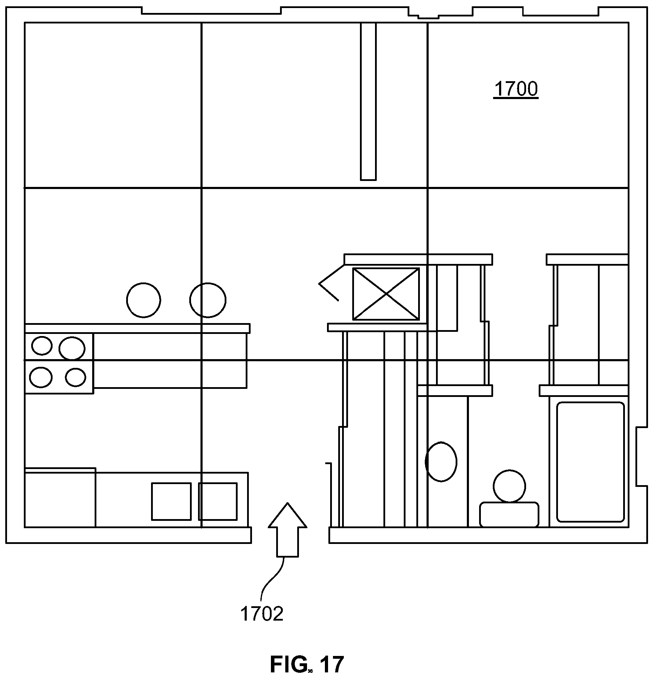

In one embodiment, the pixel image that is obtained in image acquisition engine 12 (FIG. 1B), is a floorplan 1700, as depicted in Figure 17. The image processing system 14 identifies known objects within floor plan 1700, including objects of known dimension, such as a front door 1702 or other objects of known dimension including but not limited to back doors, garage doors, ovens or stoves, doors, toilets and the like (front doors, for example, are typically 36 inches in width and 80 inches in height). Image processing system 14 segments the objects, detects the edges of such objects and builds a dimensionalized and geometric representative 3D construction image in 3D image output module 18 of floorplan 1700 based at least in part by referencing the known dimensions of the objects of standard dimension identified in floorplan 1700. In yet another embodiment, certain identifiable objects or features of floorplan 1700 of Figure 17, are introduced into object detection module 22 (Figure 1B) as training images and associated with known dimensions or dimensional relationships stored in reference database 16 for image processing system 14 to incorporate and provide as inputs into the 3D output module 18. In another embodiment of the instant invention, floorplan 1700 square footage (either provided by a user, uniquely identified on floorplan 1700 or by other means of association) is used as another input into image processing system 14 often in combination with objects of standard dimensions. In one embodiment, the detected square footage from the pixel image is further processed using optical character recognition (OCR). By dimensionalizing such objects of standard dimension, system 10 can provide useful 3D construction images as output in 3D image output module 18.

In one embodiment, an edge detection method is used by image processing system 14 to highlight identified walls on input floor plans. The identified walls become detected edges and show as black lines. The extraneous information that is added to floors plans like furniture layout and other decorative details are removed by image processing system 14. Image processing system 14 compares the length of unbroken black lines to determine if they are exterior walls. Image processing system 14 applies more weighting to longer black lines. By doing so image processing system 14 identifies the longer unbroken lines that serve as the perimeter of the floor plan. The perimeter of a floor plan is typically only broken by a front door and sometimes a rear door.

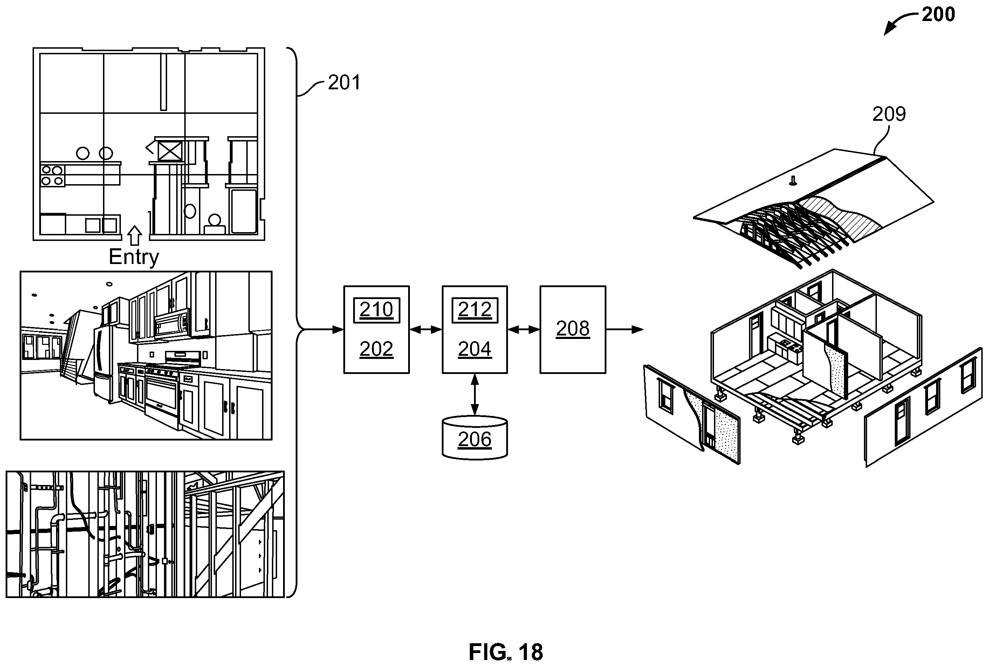

Figure 18 illustrates an exemplary system 200 for converting a plurality of pixel images 201, including, for example, digital images of room layouts, floorplans, openwall construction, other pixel images of construction elements or design details, into a 3D dimensionalized wireframe image 209. Pixel images 201 are introduced into image acquisition engine 202, the image processing system 204 identifies known objects, including objects of known dimensions, segments the objects, detects the edges of such objects and correspondingly builds a combined model and leverages the outputs of these processes to build a dimensionalized and geometric representative 3D dimensionalized wireframe image 209 in 3D image output module 208.

As will be further described below, system 200 uses a plurality of pixel images 201 and dimensionalize all structures within such pixel images 201 including, but not limited to, indoor and outdoor structure, construction objects, household objects, furnishings, and the like.

By dimensionalizing such objects, system 200 can provide 3D dimensionalized wireframe images 209 as output in 3D image output module 208. Such 3D dimensionalized wireframe image 209 provides the basis for a variety of use cases including for rapid construction quotes, remodeling-as-a-product (including kitted quotes), home design services (solicited or advertised and unsolicited), insurance quotes or many other use cases. As can be appreciated by one skilled in the art, such pixel images can be introduced throughout the lifecycle of a representative home, apartment, dwelling or the like, or throughout an entire construction project thereby capturing the two-dimensional pixel image to 3D translation of all aspects of a home including from the raw images of a newly constructed home such as the images of studded walls, household wiring, water and gas lines and many, many additional features. In one embodiment, one or more pixel images are taken daily to track the progress of a construction project. As the home or construction project is completed or improved upon, additional pixel images are introduced into system 200 to further richen the 3D dimensionalized wireframe image 209 with the latest information about construction additions, placement of construction features (such as wiring) and more subtle additions often completed during home remodeling projects that are often not captured in original blueprints or home design documents (wiring for a new ceiling fan or the like).

In addition to creating 3D dimensionalized wireframe images 209 that become more detailed over time, with more layers of identified objects and more accurate dimensioning of completed room layouts, system 200 also provides for a whole host of new business models to allow for interactive engagement with the 3D dimensionalized wireframe image 209. Some examples, include, but are not limited to: a homeowner digitally interacts with, and removes layers from, the 3D dimensionalized wireframe image 209 to determine an accurate location for studs to hang a heavy piece of artwork; an electrician accesses the 3D dimensionalized wireframe image 209, peels back layers to see a highly accurate representation of the existing wiring architecture including any identified brands or features of existing equipment like circuit breakers, cable size, or the like; a design expert interactively deploys furnishings and home improvement items without a site visit, as room dimensions, outlet location, stud availability, lighting positioning are available by interacting with the 3D dimensionalized wireframe image 209; or a contractor provides a very accurate estimate for repair or redesign without leaving her office, simply by interacting with 3D dimensionalized wireframe image 209.

In one embodiment, additional sensors can be utilized to collect supplemental information that is relevant to the home or apartment or other dwelling represented by a respective 3D dimensionalized wireframe image 209. Such examples include, but are not limited to an augmented reality system to gather additional rich information about the respective dwelling; sensors that can provide more accurate information about the interior design elements in homes including identification of household wiring, water and gas pipes or lines, cables, insulation, existence of certain building materials such as asbestos, lathe and plaster, insulation and the like; sensors that capture wind characteristics, soil conditions, ground water characteristics, sunlight, humidity or other important conditions or elements that can impact home design or repair including for example the selection of building materials, windows, insulation, roofing tiles, the appropriateness or effectiveness of solar arrays, determination if small scale wind generators are appropriate, ground drains, potential water remediation or other aspects of home building or repair where such information would be important.

In another embodiment, additional information, including certain real estate data is associated with a respective 3D dimensionalized wireframe image 209, including but not limited to satellite images of an associated property, mailing address, the context of the building, the mechanical electrical and plumbing schematics and specifications, the make and model of the appliances, the ownership history, design preferences, historical information like construction, building permits, demographics, potentially personal information of the occupants, weather patterns, sun or light patterns based on compass position, geographic information.

With all of the reference data associated to 3D dimensionalized wireframe image 209 probabilistic servicing and repairs are enabled. For example, home water heaters last about 8-10 years. But by leveraging access to large dataset of such 3D dimensionalized wireframe images 209 for a variety of homes, regions and products, the instant invention would be able to provide more accurate failure and probabilistic outcome of specific home water heaters.

In another embodiment of the invention, 3D dimensionalized wireframe image 209 is used to quickly revitalize apartments that need to be ready and available for a new tenant by having prior details about paint, carpet, whitegoods, prior quote/costs, previous contractors engaged, square footage, and previous move-in/move out dates, inspection records and the like.

The information associated with a respective 3D dimensionalized wireframe image 209 may be used for new construction, traditional remodeling, remodeling as complete productized offering, commercial tenant improvements, interior and exterior design, cataloguing and inventorying physical space and possessions for insurance purposes, placement and fitting of furniture, landscaping and lawn care, recommendations on efficient use of space, general maintenance and repair, cleaning, mechanical electrical and plumbing service and repair, appliance repair and replacement, hiring contractors to service the physical space in any way, providing sales leads to contractors, aggregation and sale of real estate data to investors, brokers and other parties, analytics for special optimization, aggregation with other public and private real estate data, enabling more efficient property management, and enabling more efficient asset management.

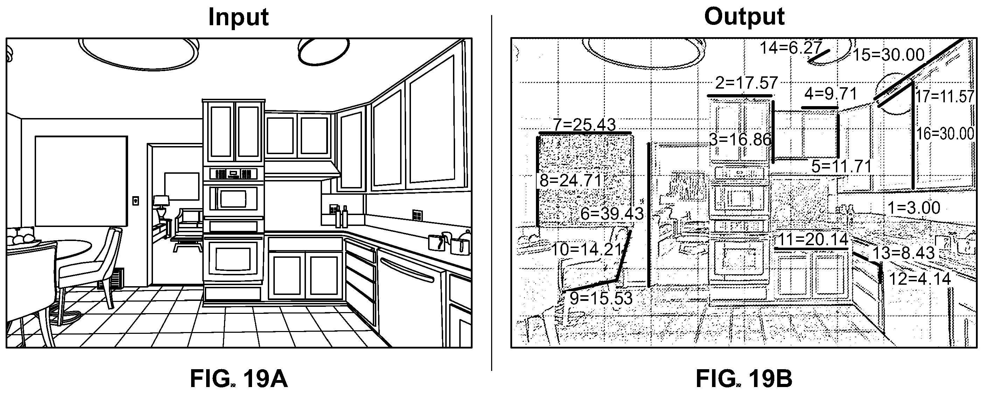

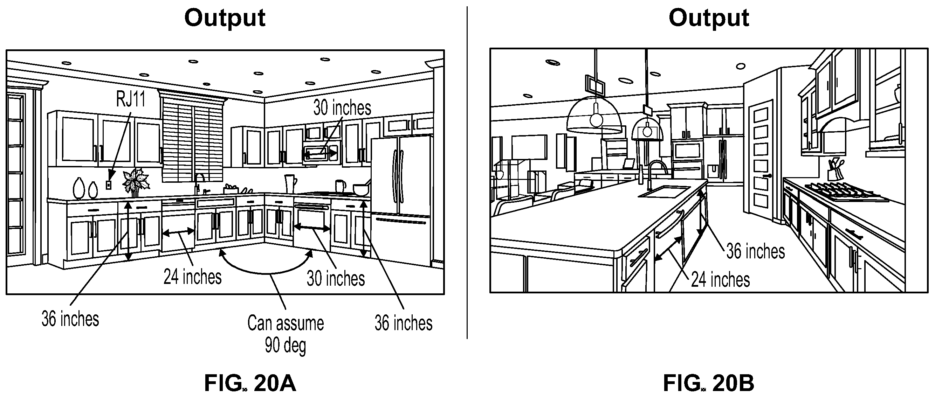

Figure 19A depicts an exemplary pixel image provided as input, while Figure 19B depicts a dimensionalized 3D construction image (reflecting real-world dimensions) generated as output in accordance with one embodiment of the instant invention. Figures 20A and 20B depict multiple examples of dimensionalized 3D construction images generated as output in accordance with various embodiments of the instant invention.

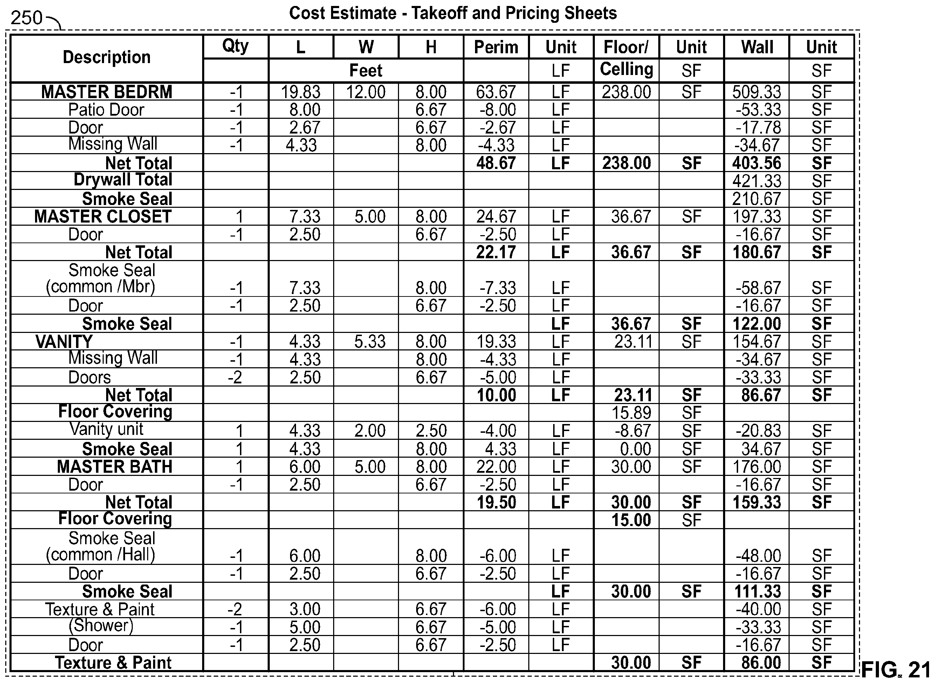

A method and system for converting at least one pixel image into a 3D context-rich takeoff package will be described. Takeoffs are typically produced to determine how much material and time is needed to complete a construction job. In fact, a construction takeoff is also commonly referred to as a material takeoff, or construction material takeoff. The phrase takeoff refers to the estimator taking each of the required materials off the blueprint for a project. An exemplary takeoff 250 is shown in FIG. 21. For many large projects, a construction takeoff is completed by the estimator during a pre-construction phase. The takeoff in combination with the blueprint or floorplan is then used to format a bid on the scope of the construction. An accurate takeoff gives both the client and a contractor a firm outline of the total material cost for a project. Depending on the size and scope of the project, construction takeoffs vary from relatively simple to incredibly complex. Because of the importance of this component of construction cost estimating construction takeoffs are a crucial component of a construction project. Creating a comprehensive construction takeoff can be extremely time-consuming if done by hand. In order to create a construction takeoff, the estimator must understand how to read blueprints and draw item quantities from the outline.

The final product of a construction material takeoff is the total material cost for a project. For each material listed in a construction takeoff, the estimator will have to assign a quantity and price. How an item is quantified depends on the type of item. For prefabricated materials, a simple count is usually sufficient. For things like lumber or piping, the estimator will need to provide accurate length requirements. Components like roofing, flooring, or cladding will be qualified using area. For some components such as concrete, the quantity will be provided in volume. Determining an accurate quantity for each component is a crucial part of the construction takeoff but it is also one of the most difficult aspects of the construction takeoff. Without the use of a digital takeoff software, the estimator must be able to perform complex calculations to arrive at accurate quantities for things like concrete or asphalt.

Even when using digital takeoff software, significant challenges with takeoffs still exist. Most blueprint dimensions must be manually input into the digital takeoff software potentially leading to user error and miscalculations. Additionally, digital takeoffs are not amenable to abrupt design changes and change orders and their corresponding impact on material quantities or materials types. Furthermore, despite accurate dimensions and materials lists, conventional takeoff lists still need additional work to analyze the required labor to complete the bid as blueprints and takeoffs alone don't provide enough context to accurately estimate the total job bid. Accurately calculating labor costs based on the material list and the design context and layout and required new construction and teardown is typically an additional step in the construction process. This additional step often requires intimate knowledge about labor rates, equipment rental fees, associate operating costs, storage fees, shipping and transportation fees, and office overhead costs to accurately represent the total bid for a given construction opportunity.

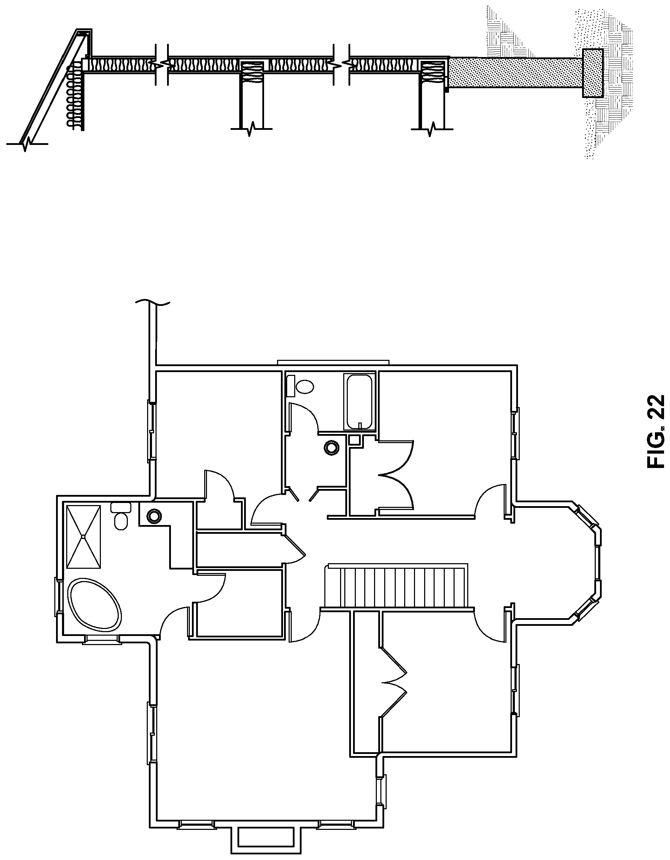

Takeoffs rely heavily on standard blueprints or architectural drawings to initiate a communication between designers, architects, builders and/or homeowners. Key aspects of blueprints are that they are able to provide measurements and dimensions plus some general context of a design layout. Blueprints are typically done in a CAD system and most often include a reference dimension for scaling. An example of a standard blueprint 275 is shown in Fig 22. The reference dimension typically includes a line bar with the dimensions such as '1 inch' and an equivalent scale in a full-size construction such as '1 foot.' Written text usually defines the contextual aspects of the blueprint such as identifying rooms like 'living room'; objects such as 'ice machine'; or other common items such as an emergency exit, refrigerated aisle, etc. Blueprints are used by designers to better understand the space and layout to see if there are opportunities for improvement and by construction teams to better understand building elements, bill of materials (through development of a construction takeoff), estimates of time to do the job (x number of cabinets requires y number of hours) and to determine if demolition or other teardown is required, or additional details about the new design. Blueprints for remodeling can include the original as-is dimensionalized space as well as the new elements and occasionally can show the new and old on the same page, for example using a dotted line for old elements that will be removed or moved.

As noted above, the current takeoff and blueprint combination is inadequate to deal with the fast-moving adjustments involving the current construction industry. The current blueprint provides basic dimensions and project detail and some level of contextual elements but does not include rich detail about parts list or required building elements and their associated quantities or cost. The existing takeoffs (whether manually or digitally entered) provide material lists and associated quantities and costs but do not provide contextual elements and details to assist in more efficient construction bidding process and do not have the ability to adapt to design changes on the fly or through change orders. Accordingly, there is a need for a technical solution that provides rich contextual construction detail and construction material takeoff lists that update based on design choices or element changes in an all-in-one digital solution.

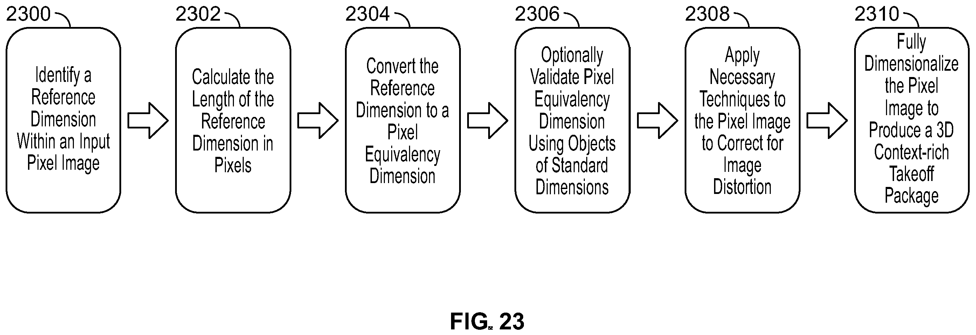

Figure 23 is a flow chart that depicts a method of converting dimensionalized construction images into a three-dimensional (3D) context-rich takeoff package, in accordance with one embodiment of the instant invention. A computer vision system identifies a reference dimension within an input pixel image 2300, such as a floorplan, blueprint or other architectural drawing. The length of the reference dimension is calculated using, for example, pixel walking 2302. The reference dimension is converted into a pixel equivalency dimension 2304, such as 42 pixels = 1 foot. Optionally, the pixel equivalency dimension is validated by identifying objects of standard dimension 2306 within the pixel image and looking up the dimensions in a reference database and comparing those to the pixel equivalency dimension, as discussed in greater detail above. Techniques are applied to the pixel image to correct for identified image distortion 2308, such as stretching etc., as previously described. Finally, the pixel image is fully dimensionalized to produce a 3D context-rich takeoff package 2310. As can be appreciated by one skilled in the art, the method of converting pixel images to a 3D context-rich takeoff package is based, in at least some embodiments, on a single 2D pixel image, such as a blueprint, provided as input.

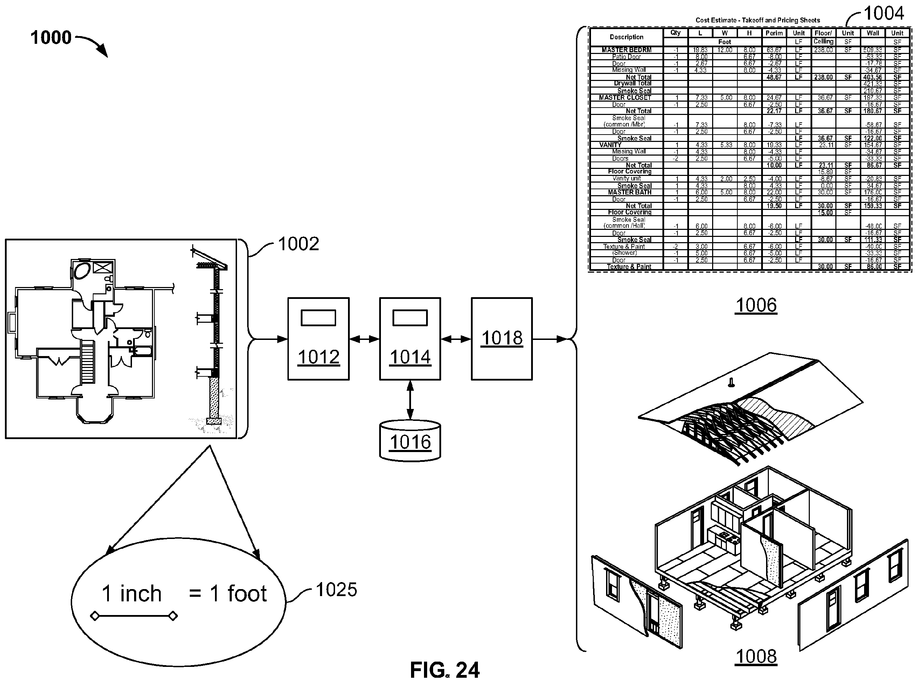

Figure 24 illustrates an exemplary system 1000 for converting at least one pixel image 1002, (e.g., blueprints or other dimensionalized construction images) into a 3D context-rich takeoff package 1004 in accordance with, for example, the method of Figure 23. In one embodiment, the 3D context-rich takeoff package 1004 provides a 3D construction image 1008 to enable construction ready use, based at least in part, on the input pixel image 1002 and a corresponding materials takeoff list 1006. System 1000 includes an image acquisition engine 1012, an image processing system 1014, a reference database 1016, and a 3D image output module 1018. Image acquisition engine 1012 acquires or is provided a representative pixel image as input into system 1000. In one embodiment, pixel image is acquired, downloaded or is an otherwise available blueprint. System 1000 converts digital representations (pixel images) of blueprints into data and dimensionalized construction information (e.g., 3D construction images and materials takeoff lists) to significantly enhance the services provided in the construction industry and other adjacent industries.

As will be further described below, system 1000 obtains at least one pixel image and dimensionalizes structures within such pixel images including, but not limited to, indoor and outdoor structures, construction objects, household objects, furnishings, and the like. By dimensionalizing such objects into real-world dimensions, system 1000 provides useful 3D construction images and material takeoff lists as output in 3D image output module 1018. Such 3D construction images and material takeoff lists provide the basis for a variety of use cases or business models including but not limited to rapid construction quotes; remodeling-as-a-product (including kitted quotes and block and made); home design services (solicited or advertised and unsolicited); insurance quotes or many other use cases. As one skilled in the art may recognize, certain embodiments of this invention are applicable to any use case wherein the contextual information such as dimension needs to be determined from a two-dimensional pixel image, such as a blueprint. As can be further appreciated, the instant invention is especially applicable when critical processes can be performed remotely, providing for quicker, higher quality and improved services by leveraging the input of pixel images and the output of 3D dimensionalized construction images and material takeoff lists. Many services in the construction industry are currently provided as one-time projects. The instant invention enables physical-space data creation and opens up significant new and improved business models, including lifetime customers relying on the accurate and up to date dimensionalized data provided about their respective property and the associated improved services enabled.

In one embodiment, the context-rich takeoff package is obtained by processing a floorplan, blueprint, or architectural drawing in image acquisition engine. The image acquisition engine processes the image to understand dimensions and certain design aspects including using object character recognition (OCR) to understand contextual aspects of the blueprint and object recognition to supplement and provide additional context for the ingested image.

In one embodiment, the image acquisition engine determines if an ingested image includes a reference dimension according to the flow chart depicted in FIG. 23. In step one, image acquisition engine first determines if the ingested image includes a reference dimension by scanning for a reference object that has the characteristics of a reference dimension including, but not limited to, the location of the reference dimension with respect to the entire ingested image (i.e., separately highlighted outside of the dimensioned floorplan or in a standard architectural location, such as bottom right of ingested image), the text that defines the dimension reference dimension (i.e., 1 inch = 1 foot) as determined using OCR or the overall image characteristics that define a reference dimension, an exemplary version of such an image is shown in FIG 24 as element 1025. If a reference dimension is located, the image processing engine captures the length of the line using a pixel count, or other techniques for accurately measuring the length of the reference dimension. Next, the text of the actual dimensions is determined using OCR or other image to text conversion techniques, to determine the ratio of pixels to the actual construction dimensions such as 42pixels = 1ft. The image acquisition system uses the ratio of pixels to real-life dimensions to dimensionalize the entire ingested drawing. In each of these steps, objects of standard dimensions can be used to validate or verify the calculated reference dimensions for the entire image.

Next, the image acquisition system uses object character recognition over the entire ingested document and characterizes the recognized text and/or symbols and uses the information provided to highlight certain details such as bathroom, boiler room, vacuum, pantry, sprinkler system, etc., to provide additional contextual information gleaned from the ingested drawing. In one embodiment, object recognition can also be utilized to reconcile and/or validate the OCR ingestion through additional known relationships, such as a toilet is associated with a bathroom, an oven is associated with a kitchen, etc.

Additionally, the image acquisition system uses object recognition to provide additional rich context to the ingested image. For example, the location of the sink in the bathroom relative to the bathtub; the cabinet height in the kitchen; cross evaluating the ingested image again for functionality (does this door open fully in the current design) and code requirements (is this wall too close to the boiler); aesthetics (does the flow of the house match the desired outcome, i.e. open floor plan, as expressed in a known rule x% of contiguous space); cost (e.g., this wall needs to be removed and typical cost associated with such removal is X dollars). In this embodiment, the location of all objects in elements represented within the ingested floorplan or blueprint are represented, dimensionalized, and bounded such that a designer, an architect, a builder, or a homeowner can make and track digital changes to the ingested design in order to improve outcomes, appearance, flow, or other desirable characteristics. In addition, as design changes occur digitally, the underlying system in real-time tracks and alerts the users to changes that would improve, or worsen certain desired outcome such as usability, aesthetics and cost or result in violations such as a code violation or a design violation. In addition, the context-rich takeoff can include and demark areas within the ingested and processed image where design elements cannot be placed, for example placing design elements too close to an emergency exit, moving walls to locations that would violate code, etc.

Additionally, context-rich takeoff can contextualize the entire space through analysis of the dimensions and design elements to provide additional information such as: this is a well-designed kitchen and adheres to the principles of the triangle between your refrigerator your sink and your stove; you have an open floor plan design based on our calculation of a certain cubic or square footage of connected space; you have designed a space that provides 94% of the usable space with exterior light. Additionally, the context-rich takeoff can include additional metrics calculated including amount of usable space to actual square footage; total linear footage of usable wall space; the total usable cabinet space cubic feet; total cubic footage of living area for HVAC calculations; the ratio of closet space to bedroom space. This novel context-rich takeoff will provide an entirely new set of contextual data that is incredibly useful by all parties to understand total livability of a design or redesign. The ratios and underlying assumptions can be updated over time and adapt to different desires or outcomes, home trends, code changes etc.

Blueprints and takeoffs are used in a number of different use cases, including but not limited to: construction, such as single-family or multi-family dwellings; manufacturing or light industry, such as plant design for clear understanding of a facility, design elements to understand employee flow and or equipment placement; and retail, important for product placement and/or customer flow.

Although specific features of the various embodiments may be shown in some drawings and not in others, this is for convenience only. In accordance with the principles of the present disclosure, any feature of a drawing may be referenced and/or claimed in combination with any feature of any other drawing.

**EP 4 111 365 B1**

This written description uses examples to describe the presently disclosed subject matter, including the best mode, and also to provide any person skilled in the art to practice the subject matter, including making and using any devices or systems in performing any incorporated methods. The patentable scope of the presently disclosed subject matter as defined by the claims, and may include other examples that occur to those skilled in the art.

**Claims**

1. A method implemented with instructions executed by a processor, comprising:

   receiving a digital image of an interior space;
   identifying at least one detected object within the digital image;
   determining dimensions of the detected object, wherein determining dimensions of the detected object is based upon identifying the detected object as a standard object of known dimensions;
   applying image segmentation to the digital image to produce a segmented image;
   detecting edges in the segmented image to produce a combined output image, wherein the combined output image is developed from the identified detected objects, the segmented image, and the detected edges;
   applying geometric transformation, field of view and depth correction to the combined output image to correct for image distortion to produce a geometrically transformed digital image; and
   applying dimensions to the geometrically transformed digital image at least partially based on the dimensions of the detected object to produce a dimensionalized floorplan.

2. The method of claim 1, wherein the dimensionalized floorplan is a three-dimensional construction image.

3. The method of claim 2, wherein the digital image comprises a floorplan, and the method further comprises using square footage of the floorplan while generating the three-dimensional construction image, wherein the square footage is provided by a user, is identified on the floorplan, or is provided by other means of association.

4. The method of claim 1, wherein the dimensionalized floorplan is wireframe image data.

5. The method of claim 1 wherein determining dimensions of the detected object is based upon a reference database.

6. The method of claim 1 wherein determining dimensions of the detected object is based upon identifying the detected object using a brand, serial number, model number or combinations thereof.

7. The method of claim 1 wherein the geometrically transformed digital image is a pixel image.

8. The method of claim 1 further comprising:

   positioning a bounding box around the detected object; and
   using the bounding box and the combined output image to determine a digital perimeter of the detected object.

9. The method of claim 8 further comprising using a geometrical correction technique in determining an adjusted digital perimeter of the detected object,
   wherein the geometrical correction techniques compare the determined digital perimeter of the detected object to dimensions or geometric properties of the detected object to calculate an angular offset therebetween to determine the adjusted digital perimeter.

10. The method of claim 1 further comprising:

    identifying a reference dimension within the digital image;
    calculating the length of the reference dimension;
    converting the length of the reference dimension into a pixel equivalency dimension; and
    using the reference dimension to produce a three-dimensional context-rich takeoff package.

11. The method of claim 10 further comprising validating the pixel equivalency dimension by using objects of standard dimensions.

12. The method of claim 10, wherein pixel walking is used calculating the length of the reference dimension.

13. The method of claim 10, wherein the three-dimensional context-rich takeoff package comprises a three-dimensional construction image and a corresponding materials takeoff list.

**Patentansprüche**

1. Verfahren, das mit durch einen Prozessor ausgeführten Anweisungen umgesetzt wird, umfassend:

   Empfangen eines digitalen Bildes eines Innenraums;
   Identifizieren mindestens eines erkannten Objekts innerhalb des digitalen Bildes;
   Bestimmen von Abmessungen des erkannten Objekts, wobei das Bestimmen von Abmessungen des erkannten Objekts auf Identifizieren des erkannten Objekts als Standardobjekt mit bekannten Abmessungen beruht;
   Anwenden einer Bildsegmentierung auf das digitale Bild, um ein segmentiertes Bild zu erzeugen;
   Erkennen von Kanten in dem segmentierten Bild, um ein kombiniertes Ausgabebild zu erzeugen, wobei das kombinierte Ausgabebild aus den identifizierten erkannten Objekten, dem segmentierten Bild und den erkannten Kanten entwickelt wird;
   Anwenden einer geometrischen Transformation, eines Sichtfelds und einer Tiefenkorrektur auf das kombinierte Ausgabebild, um Bildverzerrung zu korrigieren, um ein geometrisch transformiertes digitales Bild zu erzeugen; und
   Anwenden von Abmessungen auf das geometrisch transformierte digitale Bild zumindest teilweise auf Grundlage der Abmessungen des erkannten Objekts, um einen dimensionalisierten Grundriss zu erzeugen.

2. Verfahren nach Anspruch 1, wobei der dimensionalisierte Grundriss ein dreidimensionales Konstruktionsbild ist.

3. Verfahren nach Anspruch 2, wobei das digitale Bild einen Grundriss umfasst und das Verfahren ferner Verwenden einer Quadratmeterzahl des Grundrisses beim Erstellen des dreidimensionalen Konstruktionsbildes umfasst, wobei die Quadratmeterzahl von einem Benutzer bereitgestellt, auf dem Grundriss identifiziert oder durch andere Zuordnungsmittel bereitgestellt wird.

4. Verfahren nach Anspruch 1, wobei es sich bei dem dimensionalisierten Grundriss um Drahtgitterbilddaten handelt.

5. Verfahren nach Anspruch 1, wobei das Bestimmen von Abmessungen des erkannten Objekts auf einer Referenzdatenbank beruht.

6. Verfahren nach Anspruch 1, wobei das Bestimmen von Abmessungen des erkannten Objekts auf Identifizieren des erkannten Objekts unter Verwendung einer Marke, einer Seriennummer, einer Modellnummer oder von Kombinationen davon beruht.

7. Verfahren nach Anspruch 1, wobei das geometrisch transformierte digitale Bild ein Pixelbild ist.

8. Verfahren nach Anspruch 1, ferner umfassend:

   Positionieren eines Begrenzungsrahmens um das erkannte Objekt; und
   Verwenden des Begrenzungsrahmens und des kombinierten Ausgabebildes, um einen digitalen Umfang des erkannten Objekts zu bestimmen.

9. Verfahren nach Anspruch 8, ferner umfassend Verwenden einer geometrischen Korrekturtechnik beim Bestimmen eines angepassten digitalen Umfangs des erkannten Objekts,
   wobei die geometrischen Korrekturtechniken den bestimmten digitalen Umfang des erkannten Objekts mit Abmessungen oder geometrischen Eigenschaften des erkannten Objekts vergleichen, um einen Winkelversatz dazwischen zu berechnen, um den angepassten digitalen Umfang zu bestimmen.

10. Verfahren nach Anspruch 1, ferner umfassend:

   Identifizieren einer Referenzabmessung innerhalb des digitalen Bildes;
   Berechnen der Länge der Referenzabmessung;

Umwandeln der Länge der Referenzabmessung in eine Pixeläquivalenzenabmessung; und

Verwenden der Referenzabmessung, um ein dreidimensionales kontextreiches Startpaket zu erzeugen.

11. Verfahren nach Anspruch 10, ferner umfassend Validieren der Pixeläquivalenzenabmessung unter Verwendung von Objekten mit Standardabmessungen.

12. Verfahren nach Anspruch 10, wobei Ablaufen von Pixeln verwendet wird, um die Länge der Referenzabmessung zu berechnen.

13. Verfahren nach Anspruch 10, wobei das dreidimensionale kontextreiche Startpaket ein dreidimensionales Konstruktionsbild und eine entsprechende Materialstartliste umfasst.

**Revendications**

1. Procédé mis en œuvre avec des instructions exécutées par un processeur, comprenant :

la réception d'une image numérique d'un espace intérieur ;

l'identification d'au moins un objet détecté au sein de l'image numérique ;

la détermination de dimensions de l'objet détecté, dans lequel la détermination de dimensions de l'objet détecté est basée sur l'identification de l'objet détecté comme étant un objet standard de dimensions connues ;

l'application d'une segmentation d'image à l'image numérique pour produire une image segmentée ;

la détection de contours dans l'image segmentée pour produire une image de sortie combinée, dans lequel l'image de sortie combinée est développée à partir des objets détectés identifiés, de l'image segmentée, et des contours détectés ;

l'application d'une transformation géométrique, d'une correction de champ de vision et de profondeur à l'image de sortie combinée pour corriger une distorsion d'image afin de produire une image numérique géométriquement transformée ; et

l'application de dimensions à l'image numérique géométriquement transformée sur la base, au moins en partie, des dimensions de l'objet détecté pour produire un plan d'étage dimensionnalisé.

2. Procédé selon la revendication 1, dans lequel le plan d'étage dimensionnalisé est une image de construction tridimensionnelle.

3. Procédé selon la revendication 2, dans lequel l'image numérique comprend un plan d'étage, et le procédé comprend en outre l'utilisation de la superficie en pieds carrés du plan d'étage pendant la génération de l'image de construction tridimensionnelle, dans lequel la superficie en pieds carrés est fournie par un utilisateur, est identifiée sur le plan d'étage, ou est fournie par d'autres moyens d'association.

4. Procédé selon la revendication 1, dans lequel le plan d'étage dimensionnalisé se présente sous la forme de données d'image filaire.

5. Procédé selon la revendication 1, dans lequel la détermination de dimensions de l'objet détecté est basée sur une base de données de référence.

6. Procédé selon la revendication 1, dans lequel la détermination de dimensions de l'objet détecté est basée sur l'identification de l'objet détecté en utilisant une marque, un numéro de série, un numéro de modèle ou des combinaisons de ceux-ci.

7. Procédé selon la revendication 1, dans lequel l'image numérique géométriquement transformée est une image de pixels.

8. Procédé selon la revendication 1, comprenant en outre :

le positionnement d'une boîte de délimitation autour de l'objet détecté ; et

l'utilisation de la boîte de délimitation et de l'image de sortie combinée pour déterminer un périmètre numérique de l'objet détecté.

**9.** Procédé selon la revendication 8, comprenant en outre l'utilisation d'une technique de correction géométrique lors de la détermination d'un périmètre numérique ajusté de l'objet détecté,
dans lequel les techniques de correction géométrique comparent le périmètre numérique déterminé de l'objet détecté à des dimensions ou des propriétés géométriques de l'objet détecté pour calculer un décalage angulaire entre ceux-ci afin de déterminer le périmètre numérique ajusté.

**10.** Procédé selon la revendication 1, comprenant en outre :

l'identification d'une dimension de référence au sein de l'image numérique ;
le calcul de la longueur de la dimension de référence ;
la conversion de la longueur de la dimension de référence en une dimension d'équivalence en pixels ; et
l'utilisation de la dimension de référence pour produire un dossier de quantitatif enrichi de contexte tridimensionnel.

**11.** Procédé selon la revendication 10, comprenant en outre la validation de la dimension d'équivalence en pixels en utilisant des objets de dimensions standard.

**12.** Procédé selon la revendication 10, dans lequel le parcours de pixels est utilisé pour calculer la longueur de la dimension de référence.

**13.** Procédé selon la revendication 10, dans lequel le dossier de quantitatif enrichi de contexte tridimensionnel comprend une image de construction tridimensionnelle et une liste de quantitatif des matériaux correspondante.

100 — Identify a Standard Object within an Input Pixel Image ⇨ 102 — Look up the Dimensions of the Standard Object in a Reference Table ⇨ 104 — Apply Image Segmentation to the Pixel Image ⇨ 106 — Apply Edge Detection to Define the Boundaries within the Pixel Image ⇨ 108 — Apply Geometric Transformation, Field of View and Depth Correction to the Pixel Image to Correct for Image Distortion ⇨ 110 — Fully Dimensionalize the Pixel Image to Produce a 3d Construction Image

**FIG. 1A**

EP 4 111 365 B1

**FIG. 1B**

Output

FIG. 2D

Microwave Oven
Cabinetry
Refrigerator

FIG. 2E

Refrigerator
Dish Washer
Cabinetry
Kitchen Appliance

FIG. 2F

Microwave Oven
Oven
Cabinetry
Dish Washer
Cabinetry
Cabinetry

Input

FIG. 2A

FIG. 2B

FIG. 2C

FIG. 3B

FIG. 3A

## Input

**FIG. 4A**

**FIG. 4B**

**FIG. 4C**

## Output

**FIG. 4D**

**FIG. 4E**

**FIG. 4F**

EP 4 111 365 B1

FIG. 5

(a) Input Image   (b) Feature Map   (c) Pyramid Pooling Module   (d) Final Prediction

**FIG. 6**

EP 4 111 365 B1

**FIG. 7**

EP 4 111 365 B1

EP 4 111 365 B1

| 800 ⌐ | | 802 ⌐ | | 804 ⌐ |
|---|---|---|---|---|
| Apply Gaussian Filter to Smooth the Image and Remove Noise | → | Find Intensity Gradients of the Image | → | Apply Non-maximum Suppression |

| 806 ⌐ | | 808 ⌐ |
|---|---|---|
| Apply Double Threshold to Determine Potential Edges | → | Track Edges by Hysteresis: Finalize Edges by Suppressing all Other Edges |

**FIG. 8**

## Input

**FIG. 9A**

**FIG. 9B**

**FIG. 9C**

## Output

**FIG. 9D**

**FIG. 9E**

**FIG. 9F**

## Input

**FIG. 10A**

**FIG. 10B**

**FIG. 10C**

## Output

**FIG. 10D**

**FIG. 10E**

**FIG. 10F**

FIG. 11

EP 4 111 365 B1

Normal Plane to Camera

α

β

Camera

**FIG. 12A**

Normal Plane to Camera

α

β

Camera

**FIG. 12B**

$(x1,y1)$

$$\frac{h1}{d1}=\frac{h2}{d2}=\frac{h3}{d3}=\frac{h4}{d4}$$

$(x,y)$

h1 h2 h3 h4

d1

d3 d2

$(x2,y2)$

**FIG. 12C**

**FIG. 12D**

Normal Plane to Camera

**FIG. 12E**

Normal Plane to Camera

α

β

Camera

**FIG. 12F**

| | | |
|---|---|---|
| ⋮ 1-Gang | 4.50" Tall, 2.75" Wide | |
| ⋮⋮ 2-Gang | 4.50" Tall, 4.56" Wide | |
| ⋮⋮⋮ 3-Gang | 4.50" Tall, 6.37" Wide | |
| ⋮⋮⋮⋮ 4-Gang | 4.50" Tall, 8.18" Wide | |
| ⋮⋮⋮⋮⋮ 5-Gang | 4.50" Tall, 9.99" Wide | |
| ⋮⋮⋮⋮⋮⋮ 6-Gang | 4.50" Tall, 11.80" Wide | |

**FIG. 13**

EP 4 111 365 B1

**FIG. 14**

**FIG. 15**

FIG. 16

**FIG. 17**

EP 4 111 365 B1

200

209

208

212
204

206

210
202

201

Entry

FIG. 18

## Input

**FIG. 19A**

## Output

**FIG. 19B**

EP 4 111 365 B1

Output

36 inches

24 inches

**FIG. 20B**

Output

30 inches

30 inches

36 inches

Can assume 90 deg

24 inches

RJ11

36 inches

**FIG. 20A**

250

| Description | Qty | L | W | H | Perim | Unit | Floor/ Ceiling | Unit | Wall | Unit |
|---|---|---|---|---|---|---|---|---|---|---|
| | | Feet | | | | LF | | SF | | SF |
| **MASTER BEDRM** | -1 | 19.83 | 12.00 | 8.00 | 63.67 | LF | 238.00 | SF | 509.33 | SF |
| Patio Door | -1 | 8.00 | | 6.67 | -8.00 | LF | | | -53.33 | SF |
| Door | -1 | 2.67 | | 6.67 | -2.67 | LF | | | -17.78 | SF |
| Missing Wall | -1 | 4.33 | | 8.00 | -4.33 | LF | | | -34.67 | SF |
| **Net Total** | | | | | **48.67** | **LF** | **238.00** | **SF** | **403.56** | **SF** |
| **Drywall Total** | | | | | | | | | 421.33 | SF |
| **Smoke Seal** | | | | | | | | | 210.67 | SF |
| **MASTER CLOSET** | 1 | 7.33 | 5.00 | 8.00 | 24.67 | LF | 36.67 | SF | 197.33 | SF |
| Door | -1 | 2.50 | | 6.67 | -2.50 | LF | | | -16.67 | SF |
| **Net Total** | | | | | **22.17** | **LF** | **36.67** | **SF** | **180.67** | **SF** |
| Smoke Seal (common /Mbr) | -1 | 7.33 | | 8.00 | -7.33 | LF | | | -58.67 | SF |
| Door | -1 | 2.50 | | 6.67 | -2.50 | LF | | | -16.67 | SF |
| **Smoke Seal** | | | | | | **LF** | **36.67** | **SF** | **122.00** | **SF** |
| **VANITY** | -1 | 4.33 | 5.33 | 8.00 | 19.33 | LF | 23.11 | SF | 154.67 | SF |
| Missing Wall | -1 | 4.33 | | 8.00 | -4.33 | LF | | | -34.67 | SF |
| Doors | -2 | 2.50 | | 6.67 | -5.00 | LF | | | -33.33 | SF |
| **Net Total** | | | | | **10.00** | **LF** | **23.11** | **SF** | **86.67** | **SF** |
| **Floor Covering** | | | | | | | 15.89 | SF | | |
| Vanity unit | 1 | 4.33 | 2.00 | 2.50 | -4.00 | LF | -8.67 | SF | -20.83 | SF |
| **Smoke Seal** | 1 | 4.33 | | 8.00 | 4.33 | LF | 0.00 | SF | 34.67 | SF |
| **MASTER BATH** | 1 | 6.00 | 5.00 | 8.00 | 22.00 | LF | 30.00 | SF | 176.00 | SF |
| Door | -1 | 2.50 | | 6.67 | -2.50 | LF | | | -16.67 | SF |
| **Net Total** | | | | | **19.50** | **LF** | **30.00** | **SF** | **159.33** | **SF** |
| **Floor Covering** | | | | | | | 15.00 | SF | | |
| Smoke Seal (common /Hall) | -1 | 6.00 | | 8.00 | -6.00 | LF | | | -48.00 | SF |
| Door | -1 | 2.50 | | 6.67 | -2.50 | LF | | | -16.67 | SF |
| **Smoke Seal** | | | | | | **LF** | **30.00** | **SF** | **111.33** | **SF** |
| Texture & Paint | -2 | 3.00 | | 6.67 | -6.00 | LF | | | -40.00 | SF |
| (Shower) | -1 | 5.00 | | 6.67 | -5.00 | LF | | | -33.33 | SF |
| Door | -1 | 2.50 | | 6.67 | -2.50 | LF | | | -16.67 | SF |
| **Texture & Paint** | | | | | | | 30.00 | SF | 86.00 | SF |

**FIG. 21**

EP 4 111 365 B1

FIG. 22

| 2300 | 2302 | 2304 | 2306 | 2308 | 2310 |
|---|---|---|---|---|---|
| Identify a Reference Dimension Within an Input Pixel Image | Calculate the Length of the Reference Dimension in Pixels | Convert the Reference Dimension to a Pixel Equivalency Dimension | Optionally Validate Pixel Equivalency Dimension Using Objects of Standard Dimensions | Apply Necessary Techniques to the Pixel Image to Correct for Image Distortion | Fully Dimensionalize the Pixel Image to Produce a 3D Context-rich Takeoff Package |

**FIG. 23**

Cost Estimate - Takeoff and Pricing Sheets

1004

1006

1008

1018

1014

1016

1012

1002

1025

1 inch = 1 foot

1000

**FIG. 24**

**EP 4 111 365 B1**

**Patent documents cited in the description**

- US 62982558
- US 62982560 B
- US 62982564 B
- US 62982567 B
- US 2012183204 A1